# EUROPÄISCHE PATENTSCHRIFT

(11) **EP 4 262 613 B1**
(45) Veröffentlichungstag und Bekanntmachung des Hinweises auf die Patenterteilung: **20.08.2025**
(21) Anmeldenummer: 21840526.4
(22) Anmeldetag: 16.12.2021
(51) Int. Cl.: A61C 5/68, A61C 9/00, B01F 27/70, B05C 17/005, B29B 7/42

(54) **ROTORWELLE MIT SCHNECKENGEWINDE FÜR EINEN DYNAMISCHEN MISCHER ZUM MISCHEN NIEDRIG- BIS HOCHVISKOSER KOMPONENTEN**
ROTOR SHAFT COMPRISING A HELIX FOR A DYNAMIC MIXER FOR MIXING LOW- TO HIGH-VISCOSITY COMPONENTS
ARBRE DE ROTOR COMPRENANT UNE HÉLICE POUR UN MÉLANGEUR DYNAMIQUE POUR MÉLANGER DES COMPOSANTS DE FAIBLE VISCOSITÉ À HAUTE VISCOSITÉ

(30) Priorität: 18.12.2020 DE 102020134316
(43) Veröffentlichungstag der Anmeldung: 25.10.2023
(73) Patentinhaber: Kulzer GmbH, 63450 Hanau (DE)
(72) Erfinder: KONDZIELA, Mike, 35781 Weilburg (DE); DEKERT, Stephan, 61273 Wehrheim (DE); GRUNDLER, Andreas, 35516 Münzenberg (DE)
(74) Vertreter: Bendele, Tanja
(86) Internationale Anmeldenummer: PCT/EP2021/086173
(87) Internationale Veröffentlichungsnummer: WO 2022/129322

(56) Entgegenhaltungen:
- EP-A1- 1 417 998
- EP-A1- 1 417 998
- EP-B1- 2 548 635
- WO-A1-00/21652
- WO-A1-00/21652
- WO-A1-2007/041878
- WO-A1-2013/026722
- CH-A- 278 575
- DE-B- 1 241 417
- DE-B- 1 241 417
- DE-B3- 102004 034 371
- DE-B3- 102004 034 371
- DE-C1- 10 164 385
- DE-C1- 10 164 385
- JP-A- 2009 029 927
- US-A1- 2015 136 806

## Beschreibung

Gegenstand der Erfindung ist eine Rotorwelle für einen dynamischen Mischer, insbesondere einen dentalen dynamischen Mischer, zum Mischen niedrig- bis hochviskoser Komponenten, umfassend einen Mischbereich und eine sich an den Mischbereich anschließende Anschlussgeometrie, wobei der Mischbereich eine zentrale Welle mit einem distalen Ende und einem an die Anschlussgeometrie angrenzenden, proximalen Ende umfasst und mindestens ein Schneckengewinde aufweist. Ferner weist die Rotorwelle mindestens zwei Mischabschnitte auf, wobei ein erster Mischabschnitt mindestens zwei auf der Oberfläche der zentralen Welle radial ausgerichtete Mischflügel und ein zweiter Mischabschnitt mindestens ein Schneckengewinde mit mindestens zwei schraubenförmig verlaufenden Gewindeflanken umfasst, wobei die schraubenförmig verlaufenden Gewindeflanken die Oberfläche der zentralen Welle peripher umwinden. Ferner ist Gegenstand der Erfindung ein dynamischer Mischer, insbesondere ein dentaler dynamischer Mischer, umfassend die Rotorwelle sowie dessen Verwendung zum Mischen von niedrig- bis hoch viskosen Komponenten.

Bei mischtechnischen Vorgängen werden die Bestandteile von mindestens zwei getrennt vorliegenden Mischungskomponenten durch Relativbewegung so umpositioniert, dass ein neues Anordnungsschema in Form eines Gemisches entsteht. Je nach Konsistenz der zu mischenden Komponenten werden dabei statische oder dynamische Mischer eingesetzt. Beim statischen Mischen werden die jeweiligen Komponenten allein durch ihre Strömungsbewegung vermengt, indem sie mithilfe von statischen strömungsbeeinflussenden Elementen im Inneren eines statischen Mischers aufgeteilt, verwirbelt und wieder zusammengeführt werden. Jedoch sind statische Mischer für die Vermischung von Komponenten mit zähen Konsistenzen wegen des hohen Reibungsverlustes in der Regel weniger geeignet, weshalb in diesen Fällen auf Mischer mit rotierenden Mischelementen, sogenannte dynamische Mischer, zurückgegriffen wird. So treffen die Komponenten beim dynamischen Mischen in einer gemeinsamen Mischkammer aufeinander und werden hier durch die Scherbewegung der rotierenden Mischelemente sowie damit einhergehenden aktiven Transport homogen vermischt.

Beispielsweise offenbart die EP1149627B1 einen dynamischen Mischer für viskose Dentalmaterialien, welcher ein Kammerteil mit einer Ausbringöffnung sowie ein am hinteren Ende des Kammerteils angeordnetes Verschlussteil mit Eintrittsöffnungen umfasst, wobei im Inneren des Kammerteils ein um seine Längsachse drehbares Mischelement angeordnet ist, dessen Mischflügel radial derart versetzt angeordnet sind, dass das von einem Mischflügel gegebenenfalls nicht erfasste Material mit hoher Wahrscheinlichkeit vom darauffolgenden Mischflügel erfasst und weiter transportiert wird. In der EP2190563B1 wird ebenfalls ein dynamischer Mischer mit Mischflügeln beschrieben, jedoch findet bei diesem zum Zwecke der Erhöhung des Homogenisierungsgrades zunächst eine Vormischung der zu mischenden Komponenten in einer Vorkammer und erst anschließend deren Durchmischung in der Hauptkammer statt.

Nachteilig bei diesen ausschließlich Mischflügel verwendenden Systemen ist allerdings, dass der Fließwiderstand insbesondere bei zu mischenden Komponenten mit zähflüssigen Konsistenzen äußerst groß ist, was eine erhöhte Antriebsleistung des Mischers voraussetzt. Ferner kann durch den Einsatz einer Vor- und Hauptkammer zwar eine Optimierung der Vermischung gewährleistet werden, jedoch erfolgt gleichzeitig auch eine kritische Steigerung des Staudrucks, was ebenfalls eine notwendige Erhöhung der Antriebsleistung des Mischers bedeutet.

DE10164385C1 und WO 00/21652 A1 offenbaren eine Vorrichtung zum Vermischen von zwei pastösen Materialien mit Umlenkelement mit sich schraubenlinienförmig um die Achse herum erstreckende Umlenkfläche. EP1417998 A1 offenbart eine Mischvorrichtung mit Schraube. DE1241417 B offenbart in der Einleitung eine Misch- und Kneteinrichtung, die eine rotierende und oszillierende Schnecke besitzt, die aus in Abständen voneinander angeordneten Schneckenflügeln besteht, welche mit im Schneckengehäuse angeordneten Knetzähnen zusammenwirken. Die Knetzähne sind innen im Gehäuse und nicht an der Rotorwelle angeordnet. DE102004034371B3 offenbart eine Mischvorrichtung mit einer Schnecke und Mischflügeln. CH278575A offenbart ebenfalls eine Mischvorrichtung mit einer mit einem Schneckengewinde ausgestatteten Rotorwelle und Vorsprüngen im Gehäuse. WO2013/026722A1 offenbart eine Rotorwelle für einen dentalen dynamischen Mischer, wobei die Rotorwelle Mischflügel aufweist. Ferner werden Materialien zur Herstellung von Mischergehäuse, Deckel und Mischelement offenbart.

Aus diesem Grund besteht Bedarf an einer Mischergeometrie, welche zum einen eine erhebliche Reduzierung des Fließwiderstands ermöglicht und dennoch gleichzeitig ein zu schnelles Durchfließen der zu mischenden Komponenten verhindert.

Der vorliegenden Erfindung liegt daher die Aufgabe zu Grunde, ein Mischelement für einen dynamischen Mischer bereitzustellen, welches aufgrund seiner Geometrie eine axiale Förderbewegung der zu mischenden Komponenten mit einem geringen Fließwiderstand, jedoch bei gleichzeitigem Erreichen eines gewissen Staudrucks ermöglicht. Insbesondere sollte ein Mischelement bereitgestellt werden, für dessen Verwendung trotz hoher Anforderungen an die Homogenität des herzustellenden Gemisches nur eine geringe Antriebsleistung erforderlich ist. Ebenso liegt der vorliegenden Erfindung die Aufgabe zugrunde, einen dynamischen Mischer umfassend das Mischelement bereitzustellen, welcher die Herstellung global wie auch lokal optimal homogenisierter Dentalmaterialien ermöglicht.

Die Aufgaben der vorliegenden Erfindung werden gelöst durch eine Rotorwelle nach Anspruch 1 und einen die Rotorwelle umfassenden dynamischen Mischer nach Anspruch 13 sowie durch die Verwendung des dynamischen Mischers gemäß Anspruch 15. Bevorzugte Ausführungsformen der Erfindung sind in den Unteransprüchen sowie in der Beschreibung detailliert offenbart.

Gegenstand der Erfindung ist somit eine Rotorwelle für einen dynamischen Mischer nach Anspruch 1, insbesondere einen dentalen dynamischen Mischer, zum Mischen niedrig- bis hochviskoser Komponenten, umfassend einen Mischbereich nach Anspruch 1 und eine sich an den Mischbereich anschließende Anschlussgeometrie, wobei der Mischbereich eine zentrale Welle mit einem distalen Ende und einem an die Anschlussgeometrie angrenzenden, proximalen Ende umfasst, wobei der Mischbereich mindestens ein Schneckengewinde mit mindestens zwei schraubenförmig verlaufenden Gewindeflanken umfasst, wobei die schraubenförmig verlaufenden Gewindeflanken die Oberfläche der zentralen Welle peripher umwinden.

Erfindungsgemäß werden die Aufgaben der vorliegenden Erfindung dadurch gelöst, dass eine Rotorwelle für einen dynamischen Mischer, insbesondere einen dentalen dynamischen Mischer, zum Mischen niedrig- bis hochviskoser Komponenten bereitgestellt wird, welche mindestens ein Schneckengewinde aufweist, wobei sich die Rotorwelle in mindestens zwei Mischabschnitte gliedert - einen ersten Mischabschnitt mit mindestens zwei Mischflügeln, welcher vorzugsweise zur Rotation in einer Hauptkammer eines dynamischen Mischers vorgesehen ist, und einen zweiten Mischabschnitt mit mindestens einem Schneckengewinde, welcher vorzugsweise zur Rotation in einer Vormischkammer des dynamischen Mischers vorgesehen ist. Die Wahl einer Schneckengeometrie in dem in Ausbringrichtung am Anfang liegenden, zweiten Mischabschnitt hat den Vorteil, dass die Komponentenströme direkt zusammengeführt und durch die Schneckenflanken an einem schnellen Durchfließen gehindert werden, was bereits in diesem Mischabschnitt eine gute Durchmischung der Komponenten aufgrund des resultierenden Staudrucks ermöglicht. Gleichzeitig wird durch die Drehbewegung der Schneckenflanken eine axiale Förderbewegung der Komponenten in den nächsten Mischabschnitt unterstützt, wobei durch die Schneckengeometrie der zur Verfügung stehenden Förder- bzw. Mischweg vergrößert wird, ohne dass es einer Verlängerung der Baugrößere des dynamischen Mischers bedarf. Überdies kann es als vorteilhaft angesehen werden, dass sich die Schneckengeometrie gegenüber der Positionierung der Einlassöffnungen zur Einbringung der zu mischenden Komponenten äußerst tolerant zeigt, was das Design eines zugehörigen dynamischen Mischers erleichtert.

Die erfindungsgemäße Rotorwelle ermöglicht aufgrund ihrer Gliederung in mindestens zwei unterschiedliche Mischabschnitte sowohl eine globale Homogenisierung des Komponentengemischen, insbesondere in der Vormischkammer des dynamischen Mischers, als auch dessen anschließende, insbesondere in der Hauptkammer des dynamischen Mischers stattfindende, lokale Homogenisierung. In diesem Sinne wird durch das erfindungsgemäße verwendete Schneckengewinde im zweiten Mischabschnitt auf globaler Ebene eine gleichmäßige punktuelle Verteilung der Komponenten über den gesamten Strömungsquerschnitt und durch die zusätzliche Verwendung der sich im ersten Mischabschnitt befindenden Mischflügel auf lokaler Ebene eine möglichst geringe örtliche Abweichung von der mittleren Konzentration erreicht. Somit lassen sich mit der erfindungsgemäßen Rotorwelle und dem zugehörigen dynamischen Mischer trotz geringer Antriebsleistung global wie auch lokal optimal homogenisierte, niedrig- bis hochviskose, insbesondere pastöse, Dentalmaterialien herstellen.

Die Viskosität bezeichnet die Zähflüssigkeit von Fluiden und wird in Pascalsekunden (Pa·s) angegeben. Dabei erfolgt die Einteilung in drei Kategorien: niedrig-, mittel- und hochviskos. Die Grenzen zwischen den einzelnen Kategorien liegen bei etwa 300 mPa·s für den Übergang zwischen niedrig- und mittelviskosen Fluiden und bei etwa 8000 mPa·s für den Übergang zwischen mittel- und hochviskosen Fluiden. Zu den hochviskosen Fluiden zählen insbesondere auch pastöse Dentalmaterialien, vorzugsweise 2-komponentige (2K-) Abformmaterialien, welche in Form einer Basispaste und einer Katalysatorpaste vorliegen, welche vor Verwendung durch die erfindungsgemäße Rotorwelle und den erfindungsgemäßen dynamischen Mischer homogen vermischt werden müssen.

Gegenstand der Erfindung ist daher besonders bevorzugt eine Rotorwelle für einen dynamischen Mischer, insbesondere einen dentalen dynamischen Mischer, zum Mischen niedrig- bis hochviskoser Komponenten, insbesondere von mindestens zwei niedrig- bis hochviskosen Dentalmaterialien, umfassend einen Mischbereich und eine sich an den Mischbereich anschließende Anschlussgeometrie, wobei der Mischbereich eine zentrale Welle mit einem distalen Ende und einem an die Anschlussgeometrie angrenzenden, proximalen Ende umfasst und mindestens zwei Mischabschnitte aufweist, wobei ein erster Mischabschnitt mindestens zwei auf der Oberfläche der zentralen Welle radial ausgerichtete Mischflügel, und ein zweiter Mischabschnitt mindestens ein Schneckengewinde mit mindestens zwei schraubenförmig verlaufenden Gewindeflankenumfasst, wobei die schraubenförmig verlaufenden Gewindeflanken die Oberfläche der zentralen Welle peripher, insbesondere zweimal peripher, umwinden.

Erfindungsgemäß ist der Mischbereich zur Anordnung innerhalb eines dynamischen Mischers, insbesondere innerhalb mindestens einer Mischkammer eines dynamischen Mischers, vorgesehen, während die Anschlussgeometrie aus einer Öffnung, insbesondere einer Rotoröffnung, optional mit einer diese umrandenden Aufnahme, des dynamischen Mischers herausragen und an eine Mischerantriebswelle gekoppelt werden soll. In dem Mischbereich kann ein Vormischbereich ausgebildet sein, der noch vor der Hauptmischkammer und einer Vormischkammer angeordnet sein kann. Dementsprechend ist die Anschlussgeometrie in branchenüblicher Art und Weise ausgestaltet und weist eine polygonale Geometrie auf, insbesondere eine Vierkant-, Sechskant-, oder Achtkant-Geometrie. Dabei ist es zudem vorteilhaft, wenn der Durchmesser der Anschlussgeometrie kleiner als der Durchmesser der Rotoröffnung samt Aufnahme gewählt ist. Vorzugsweise liegt der Durchmesser der Anschlussgeometrie daher im Bereich von größer gleich 5 mm bis kleiner gleich 10 mm, insbesondere bei 8,5 ± 0,1 mm.

Distal an die Anschlussgeometrie angrenzend ist eine zum Mischbereich gehörige zentrale Welle ausgebildet, welche einen kleineren Durchmesser als die Anschlussgeometrie aufweisen kann, um eine Reduzierung des Fließwiderstands der zu mischenden Komponenten zu bewirken. So liegt der Durchmesser der zentralen Welle d vorzugsweise im Bereich von 1 mm bis 10 mm, bevorzugt im Bereich von 4 mm bis 8 mm, besonders bevorzugt bei 6 ± 0,5 mm. Dabei ist es zudem bevorzugt, wenn der Durchmesser der zentralen Wellen im gesamten Mischbereich, insbesondere im ersten Mischabschnitt und im zweiten Mischabschnitt, einheitlich ist. Als zentrale Welle wird im Rahmen der vorliegenden Erfindung ein längliches, um seine Längsachse rotierendes Maschinenelement zur Übertragung der von einer Mischerantriebswelle ausgehenden Drehbewegungen und Drehmomente verstanden. Die zentrale Welle ist zylinderförmig und weist einen polygonalen Querschnitt, insbesondere einen kreisförmigen Querschnitt, auf. Dabei ist das distale Ende der zentralen Welle vorzugsweise konisch zulaufend ausgebildet und im Bereich der Auslassöffnung eines dynamischen Mischers, insbesondere des Gehäusekörpers eines dynamischen Mischers, angeordnet, während das proximale Ende zur Anordnung im Bereich der Rotoröffnung eines dynamischen Mischers, insbesondere des Deckels eines dynamischen Mischers, vorgesehen ist.

Eine bevorzugte Anordnung der erfindungsgemäßen Rotorwelle sieht daher einen Mischbereich mit mindestens zwei Mischabschnitten entlang der zentralen Welle und eine proximal an den Mischbereich bzw. die zentrale Welle angrenzende Anschlussgeometrie vor. Erfindungsgemäß besonders bevorzugt ist ein erster Mischabschnitt im Bereich des distalen Endes der zentralen Welle angeordnet, an welchen proximal angrenzend ein zweiter Mischabschnitt, insbesondere im Bereich des proximalen Endes der zentralen Welle, anschließt und welcher wiederum in die proximal angrenzende Anschlussgeometrie übergeht. Dabei verläuft die bei Verwendung der erfindungsgemäßen Rotorwelle zu beachtende Förderrichtung von proximal nach distal.

Der erste Mischabschnitt entspricht im Wesentlichen dem in der EP1149627B1 Mischelement. Er umfasst mindestens zwei, insbesondere zwei bis 20, auf der Oberfläche der zentralen Welle radial ausgerichtete Mischflügel, bevorzugt größer gleich drei bis kleiner gleich zehn, besonders bevorzugt größer gleich vier bis kleiner gleich sechs, auf der Oberfläche der zentralen Welle radial ausgerichtete Mischflügel. Dabei sind die Mischfläche in Bezug auf die Längsachse der zentralen Welle hintereinander angeordnet und weisen vorzugsweise einen Abstand zueinander von größer gleich 0,1 mm bis kleiner gleich 10 mm, bevorzugt von größer gleich 0,05 mm bis kleiner gleich 8 mm, besonders bevorzugt von größer gleich 1 mm bis kleiner gleich 5 mm, insbesondere von 2,50 ± 0,1 mm, auf.

Die Mischflügel weisen vorzugsweise in axialer Richtung freie Durchlässe auf, wobei die freien Durchlässe eines Mischflügels jeweils durch die Durchlass-freien Teile eines benachbarten Mischflügels abgedeckt werden. Diese versetzte Anordnung hat den Vorteil, dass das von einem vorhergehenden Mischflügel gegebenenfalls nicht erfasste Material von einem nachfolgenden Mischflügel erfasst, gescherrt und mit dem restlichen Material vermischt wird. Gemäß einer bevorzugten Ausführungsform der vorliegenden Erfindung sind daher die mindestens zwei, im ersten Mischabschnitt auf der Oberfläche der zentralen Welle radial ausgerichteten Mischflügel jeweils aus mindestens drei Mischflügelsegmenten, insbesondere vier Mischflügelsegmenten, zusammengesetzt, wobei die mindestens drei Mischflügelsegmente auf der Oberfläche der zentralen Welle um jeweils 60° bis 120°, insbesondere um ca. 90°, zueinander gedreht angeordnet sind. Dabei liegen die Mischflügelsegmente eines einzelnen Mischflügels in einer gemeinsamen Ebene, deren Normalenvektor die Längsachse der zentralen Welle ist und erzeugen somit die freien Durchlässe der Mischflügel, welche jeweils durch die Durchlass-freien Teile der benachbarten Mischflügel abgedeckt werden. In diesem Sinne sind die Mischflügelsegmente vorzugsweise um 45° gedreht zu den Mischflügelsegmenten der benachbarten Mischflügel angeordnet.

Überdies kann es bevorzugt sein, wenn die Mischflügel in Bezug auf die Längsachse der zentralen Welle orthogonal ausgerichtet, d.h. anstiegsfrei ausgebildet sind, um die Rotorwelle und ihre Verbindung zur Mischerantriebswelle einer nicht allzu hohen mechanischen Belastung durch eine mit einer Schrägstellung der Mischflügel einhergehenden Ausbringwirkung auszusetzen. Die Mischflügel weisen daher vorzugsweise eine einheitliche Dicke auf und sind sowohl bei Betrachtung ihrer proximalen Oberfläche als auch bei Betrachtung ihrer distalen Oberfläche orthogonal zur Längsachse der zentralen Welle ausgerichtet. Jedoch kann es erfindungsgemäß vorteilhaft sein, wenn der im Bereich des distalen Endes der zentralen Welle angerordnete, erste Mischflügel in distaler Richtung trapezförmig zuläuft und damit an seinem peripheren Rand eine geringere Dicke als an der Verbindungsstelle zur zentralen Welle aufweist.

Der zweite Mischabschnitt ist erfindungsgemäß unterschiedlich zum ersten Mischabschnitt ausgebildet. Er weist mindestens ein Schneckengewinde mit mindestens einer schraubenförmig verlaufenden Gewindeflanke, vorzugsweise mit mindestens 1 bis 20, insbesondere mit mindestens 1,5 bis 20, vorzugsweise 2 bis 10, schraubenförmig verlaufenden Gewindeflanken, auf. Im Rahmen der vorliegenden Erfindung wird dabei unter dem Begriff Schneckengewinde ein Außengewinde, insbesondere ein rechtssteigendes Außengewinde, verstanden, das durch schraubenförmige Windungen mindestens eines, peripher um den Mantel der zentralen Welle angeordneten Mischelements zustande kommt. Vorzugsweise handelt es sich um eine einzelne Vollblattschnecke, bestehend aus einem fortlaufenden Gewinde oder einzelnen, stumpf miteinander verbundenen Schneckenflügelsegmenten. Daneben kann der zweite Mischabschnitt, aber auch mehrere Schneckengewinde, wie mindestens zwei bis fünf Schneckengewinde, umfassen, welche entsprechend einer mehrgängigen Schraube um den Mantel der zentralen Welle gewunden sind.

Die schraubenförmigen Windungen, insbesondere die mindestens 1,5 bis 20 schraubenförmigen Windungen, des mindestens einen Mischelements bilden die Gewindeflanken des Schneckengewindes. Somit wird als Gewindeflanke im Rahmen der vorliegenden Erfindung ein Flächenelement verstanden, welches mit einer vollen Umdrehung einmal peripher um den Mantel der zentralen Welle gewunden ist. Zwischen den einzelnen Gewindeflanken befinden sich die jeweils zugehörigen Gewindegänge, welche somit von je zwei benachbarten, einander zugewandten Gewindeflanken eingerahmt werden. Die Gewindeflanken sind vorzugsweise mit der zentralen Welle gefügt verbunden, insbesondere verkantet und/oder verschweißt, oder integral mit der zentralen Welle ausgebildet. Dabei kann es erfindungsgemäß bevorzugt sein, wenn die Kanten der schraubenförmig verlaufenden Gewindeflanken orthogonal auf dem Mantel der zentralen Welle stehen.

Durch das erfindungsgemäß im zweiten Mischabschnitt vorgesehene Schneckengewinde, welches vorzugsweise rechtssteigend ausgebildet ist, kann in vorteilhafter Weise während des Mischvorgangs zunächst ein notwendiger Gegendruck zur Vormischung der zu mischenden Komponenten aufgebaut werden und anschließend eine axiale Förderung der zu mischenden Komponenten entlang eines entsprechend der Windungen verlängerten Mischwegs in Richtung des ersten Mischabschnitts bewirkt werden. Der zweite Mischabschnitt ist daher vorzugsweise zur Anordnung in einer Vormischkammer und der erste Mischabschnitt zur Anordnung in einer Hauptmischkammer des dynamischen Mischers vorgesehen.

Aus diesem Grund sind in einer bevorzugten Ausführungsform der Erfindung die schraubenförmig verlaufenden Gewindeflanken des Schneckengewindes im zweiten Mischabschnitt von den mindestens zwei Mischflügeln im ersten Mischabschnitt beabstandet angeordnet. Insbesondere beträgt der Abstand zwischen dem distalen Ende des Schneckengewindes im zweiten Mischabschnitt und dem proximalen Ende des letzten Mischflügels des ersten Mischabschnitts, gemessen entlang der Längsachse der zentralen Welle größer gleich 1 mm bis kleiner gleich 25 mm, bevorzugt größer gleich 2 mm bis kleiner gleich 20 mm, besonders bevorzugt größer gleich 2,5 mm bis kleiner gleich 10 mm.

In einer besonders bevorzugten Ausführungsform der Erfindung liegt zudem das Verhältnis der Länge des zweiten Mischabschnitts zur Länge des ersten Mischabschnitts im Bereichsintervall von 1 : 4 bis 10 : 1, bevorzugt im Bereichsintervall von 1 : 3 bis 5 : 1, besonders bevorzugt von 1 : 2, 5 bis 2,5 : 1, insbesondere in Bezug auf die Längsachse der zentralen Welle. Dabei beträgt die Länge des ersten Mischabschnitts vorzugsweise größer gleich 20 mm bis kleiner gleich 30 mm, insbesondere 24 ± 1 mm, und die Länge des zweiten Mischabschnitts vorzugsweise größer gleich 5 mm bis kleiner gleich 15 mm, insbesondere 10 ± 1 mm.

Insbesondere liegt das Verhältnis des vom zweiten Mischabschnitt eingenommenen Volumens zu dem vom ersten Mischabschnitt eingenommenen Volumen im Bereichsintervall von 1 : 5 bis 5 : 1, bevorzugt im Bereichsintervall von 1 : 1 bis 2 : 5, besonders bevorzugt von 2 : 3 bis 1 : 2. Dabei beträgt das Volumen des ersten Mischabschnitts vorzugsweise größer gleich 1000 mm³ bis kleiner gleich 2000 mm³, insbesondere 1200 ± 100 mm³, und das Volumen des zweiten Mischabschnitts vorzugsweise größer gleich 100 mm³ bis kleiner gleich 1000 mm³, insbesondere 600 ± 100 mm³.

Zudem liegt insbesondere das Verhältnis des vom zweiten Mischabschnitt belassenen Freiraums (Volumen in mm³) zu dem vom ersten Mischabschnitt belassenen Freiraum im Bereichsintervall von 2 : 1 bis 1 : 2, bevorzugt im Bereichsintervall von 3 : 2 bis 2 : 3, besonderes bevorzugt bei etwa 1 : 1, insbesondere mit +/- 10 Vol.-%. Dabei wird unter dem jeweils belassenen Freiraum dasjenige Volumen verstanden, dass von der zentralen Welle sowie dem Schneckengewinde im ersten Mischabschnitt bzw. von der zentralen Welle sowie den Mischflügeln im zweiten Mischabschnitt nicht eingenommen wird, vorzugsweise zuzüglich des Volumens eines durch den Abstand zu den inneren Wandungen des Gehäuses eines dynamischen Mischers, insbesondere durch das Schneckenspiel, entstehenden Hohlzylinders. Dieses Volumen des belassenen Freiraums beträgt im Falle des ersten Mischabschnitts und/oder im Falle des zweiten Mischabschnitts vorzugsweise größer gleich 2000 mm³ bis kleiner gleich 3000 mm³, insbesondere 2500 ± 100 mm³.

Dabei ist insbesondere der Anteil des zweiten Mischabschnitts an der Länge der zentralen Welle (i) größer als der Anteil des ersten Mischabschnitts an der Länge der zentralen Welle, (ii) im Wesentlichen gleich groß wie der Anteil des ersten Mischabschnitts an der Länge der zentralen Welle, oder (iii) kleiner als der Anteil des ersten Mischabschnitts an der Länge der zentralen Welle. Vorzugsweise beträgt der Anteil des zweiten Mischabschnitts an der Länge der zentralen Welle größer gleich 20 % bis kleiner gleich 40 %, insbesondere etwa 30 % an der Länge der zentralen Welle. Alternativ kann der Anteil des zweiten Mischabschnitts aber auch so groß wie möglich ausfallen, d.h. größer gleich 60 % bis kleiner gleich 100 % betragen, und der Anteil des ersten Mischabschnitts entsprechend klein ausfallen. Die jeweilige Zusammenstellung des Mischbereichs umfassend mindestens einen ersten Mischabschnitt und mindestens einen zweiten Mischabschnitt kann beliebig gewählt werden und hängt von der Konsistenz der zu mischenden Komponenten sowie der gewünschten Homogenität des Zielgemisches ab.

Hierbei können zur Charakterisierung des ersten und zweiten Mischabschnitts die jeweiligen Eigenschaften der entsprechenden Mischelemente herangezogen werden, insbesondere der Flügeldurchmesser sowie die Flügelbreite der Mischflügel des ersten Mischabschnitts und der Schneckendurchmesser, die Stegbreite, die Gangtiefe, die Gangbreite, die Ganghöhe sowie der Gangwinkel des Schneckengewindes des zweiten Mischabschnitts.

In diesem Sinne beträgt in einer bevorzugten Ausführungsform der Erfindung a) der Flügeldurchmesser F der Mischflügel des ersten Mischabschnitts, unter welchem im Rahmen der vorliegenden Erfindung der Durchmesser eines fiktiven Zylinders verstanden wird, welcher durch Rotation der peripheren Ränder der mindestens zwei Mischflügel im ersten Mischbereich zustande kommt, größer gleich 10 mm bis kleiner gleich 20 mm, bevorzugt größer gleich 11 mm bis kleiner gleich 15 mm, besonders bevorzugt 13 ± 1 mm, und/oder b) der Schneckendurchmesser D des Schneckengewindes des zweiten Mischabschnitts, unter welchem im Rahmen der vorliegenden Erfindung der Durchmesser eines fiktiven Zylinders verstanden wird, welcher durch Rotation der peripheren Ränder der schraubenförmige verlaufenden Gewindeflanken des Schraubengewindes im zweiten Mischabschnitt zustande kommt, größer gleich 10 mm bis kleiner gleich 20 mm, bevorzugt größer gleich 14 mm bis kleiner gleich 18 mm, besonders bevorzugt 16 ± 1 mm. Somit ist der Flügeldurchmesser F vorzugsweise kleiner als der Schneckendurchmesser D ausgebildet. Insbesondere liegt das Verhältnis von Flügeldurchmesser F zu Schneckendurchmesser D im Bereich von 1 : 1 bis 1 : 2, insbesondere bei etwa 1 : 1,2. Überdies kann das Verhältnis des Flügeldurchmesser F und/oder des Schneckendurchmessers D zum Durchmesser der zentralen Welle im Bereich von 3 : 1 bis 2 : 1 liegen, insbesondere bei etwa 2,2 : 1 für das Verhältnis des Flügeldurchmessers F zum Durchmesser der zentralen Welle d und/oder bei etwa 2,7 : 1 für das Verhältnis des Schneckendurchmesser D zum Durchmesser der zentralen Welle d.

In einer weiter bevorzugten Ausführungsform der Erfindung beträgt ferner a) die Flügelbreite G der Mischflügel des ersten Mischabschnitts, unter welcher im Rahmen der vorliegenden Erfindung die Schichtdicke der Mischflügel, gemessen parallel zur Längsachse der zentralen Welle, verstanden wird, größer gleich 1 mm bis kleiner gleich 10 mm, bevorzugt größer gleich 2 mm bis kleiner gleich 4 mm, besonders bevorzugt 2,5 ± 0,1 mm oder 3,7 ± 0,1 mm, und/oder b) die Stegbreite E des Schneckengewindes des zweiten Mischabschnitts, unter welcher im Rahmen der vorliegenden Erfindung die Schichtdicke der Schraubenförmig verlaufenden Gewindeflanken des Schneckengewindes, gemessen parallel zur Längsachse der zentralen Welle, verstanden wird, größer gleich 0,1 mm bis kleiner gleich 5 mm, bevorzugt größer gleich 0,5 mm bis kleiner gleich 2 mm, besonders bevorzugt 1 ± 0,1 mm. Dabei kann es bevorzugt sein, wenn die Flügelbreite G der Mischflügel dem Abstand der einzelnen Mischflügel zueinander entspricht, wobei allerdings vorzugsweise der erste, trapezförmig zulaufende Mischflügels breiter als der zweite und jeder weitere Mischflügel ausgebildet ist. Ebenso kann es bevorzugt sein, wenn die Stegbreite E des Schneckengewindes über die gesamte Länge des zweiten Mischabschnitts einheitlich ist, die einzelnen Gewindeflanken des Schneckengewindes also eine einheitliche Stegbreite aufweisen. Besonders bevorzugt ist ferner neben der Stegbreite E auch der Gangwinkel α des Schneckengewindes über die gesamte Länge des zweiten Mischabschnitts einheitlich gewählt.

Daher ist gemäß einer Ausführungsform der Erfindung eine Rotorwelle besonders bevorzugt, bei der die Gewindeflanken des Schneckengewindes im zweiten Mischabschnitt die Oberflächen der zentralen Welle helixförmig, d.h. mit einem einheitlichen Gangwinkel α umwinden. Als Helix wird dabei im Rahmen der Erfindung eine Kurve mit konstanter Steigung verstanden, welche sich um den Mantel der zentralen Welle windet. Die Helix ist vorzugsweise eingängig, d.h. das Schneckengewinde entspricht einer einzelnen Helix, die aus der entsprechenden Anzahl an Gewindeflanken zusammengesetzt ist. Zudem ist die Helix vorzugsweise rechtsgängig, d.h. das Schneckengewinde windet sich im Uhrzeigersinn.

Der Gangwinkel α entspricht dem Arkustangens des Quotienten aus der Ganghöhe T der Helix, also diejenigen Strecke, um die sich die Helix bei einer vollen Umdrehung entlang der Längsachse der zentralen Welle windet, und dem doppelten Durchmesser der zentralen Welle d, also dem doppelten Kerndurchmesser der Helix. Der Quotient gibt dabei die Steigung einer Geraden an, welche durch ein "Abwickeln" der Helix gemeinsam mit dem Mantel der zentralen Welle zustande kommt. Vorzugsweise beträgt der Gangwinkel α der Helix bzw. des Schneckengewindes größer gleich 1° bis kleiner gleich 30°, bevorzugt größer gleich 3° bis kleiner gleich 20°, besonders bevorzugt größer gleich 7° bis kleiner gleich 11°.

Des Weiteren kann die Helix bzw. das erfindungsgemäße Schneckengewinde dadurch charakterisiert werden, dass gemäß einer weiter bevorzugten Ausführungsform der Erfindung (i) die Gangbreite B in Bezug auf den Schneckendurchmesser D größer gleich 0,1D bis kleiner gleich 4D, insbesondere größer gleich 0,3D bis kleiner gleich 1,1D, beträgt, und/oder (ii) die Ganghöhe T in Bezug auf den Schneckendurchmesser D größer gleich 0,25D bis kleiner gleich 4,5D, insbesondere größer gleich 0,5D bis kleiner gleich 1,5D, beträgt. Dabei entspricht die Gangbreite B dem axialen Abstand zwischen zwei kongruenten Punkten zweier benachbarter Gewindeflanken, also der Breite des von den Gewindeflanken eingerahmten Gewindeganges, und beträgt vorzugsweise größer gleich 2 mm bis kleiner gleich 7 mm, insbesondere 4,5 ± 0,1 mm. Die Ganghöhe T wird auch Gangsteigung genannt und ergibt sich aus der Summe aus Gangbreite B und Stegbreite E. Dementsprechend wird mithilfe der Ganghöhe T die Strecke angegeben, um die sich das Schraubengewinde bei einer vollen Umdrehung entlang der Längsachse der zentralen Welle windet. Sie beträgt vorzugsweise größer gleich 4 mm bis kleiner gleich 8 mm, insbesondere 6 ± 0,1 mm.

Überdies beträgt gemäß einer gleichfalls bevorzugten Ausführungsform der vorliegenden Erfindung die Gangtiefe H größer gleich 1 mm bis keiner gleich 10 mm, insbesondere größer gleich 4,5 mm bis kleiner gleich 7,5 mm, wie 6 ± 0,1 mm. Die Gangtiefe H ergibt sich aus der Hälfte der Differenz aus dem Schneckendurchmesser D und dem Durchmesser der zentralen Welle d (Kerndurchmesser des Schneckengewindes) und entspricht damit der Spurbreite der Gewindeflanken, gemessen orthogonal zur Längsachse der zentralen Welle.

Somit können die Mischelemente der mindestens zwei Mischabschnitte des Mischbereichs der erfindungsgemäßen Rotorwelle in Bezug auf den Durchmesser der zentralen Welle d zusammenfassend folgendermaßen charakterisiert werden:
- die Gangbreite B des Schneckengewindes des zweiten Mischabschnitts liegt im Bereich von größer gleich 0,5d bis kleiner gleich 1d, und/oder
- der Schneckendurchmesser D des Schneckengewindes des zweiten Mischabschnitts liegt im Bereich von größer gleich 2,5d bis kleiner gleich 3d, und/oder
- die Stegbreite E des Schneckengewindes des zweiten Mischabschnitts liegt im Bereich von größer gleich 0,01d bis kleiner gleich 0,5d, und/oder
- der Flügeldurchmesser F der Mischflügel des ersten Mischabschnitts liegt im Bereich von größer gleich 2d bis kleiner gleich 2,5d, und/oder
- die Flügelbreite G der Mischflügel des ersten Mischabschnitts liegt im Bereich von größer gleich 0,25d bis kleiner gleich 0,75d, und/oder
- die Gangtiefe H des Schneckengewindes des zweiten Mischabschnitts liegt im Bereich von größer gleich 0,75d bis kleiner gleich 1,25d, und/oder
- die Ganghöhe T des Schneckengewindes des zweiten Mischabschnitts liegt im Bereich von größer gleich 0,75d bis kleiner gleich 1,25d.

Sofern der Mischabschnitt lediglich ein Schneckengewinde umfasst, kann es bevorzugt sein, wenn der Schneckendurchmesser D des Schneckengewindes größer gleich 10 mm bis kleiner gleich 20 mm, insbesondere größer gleich 14 mm bis kleiner gleich 18 mm, beträgt, wobei vorzugsweise der Durchmesser d der zentralen Welle größer gleich 1 mm bis kleiner gleich 10 mm, insbesondere größer gleich 4 mm bis kleiner gleich 8 mm beträgt und/oder wenn die Stegbreite E des Schneckengewindes größer gleich 0,1 mm bis kleiner gleich 5 mm, insbesondere größer gleich 0,5 mm bis kleiner gleich 2 mm, beträgt.

In einer bevorzugten Ausführungsform der vorliegenden Erfindung weist die Oberfläche der Gewindeflanken des Schneckengewindes eine Rauheit Rₐ von kleiner gleich 2,5 µm, insbesondere eine Rauheit Rₐ von kleiner gleich 1,6 µm auf. Die Rauheit Rₐ wird als Mittenrauwert Rₐ gemäß VDINDE 3400 verstanden und kann mittels bekannter Messmethoden ermittelt werden. Bevorzugt beträgt die Rauheit Rₐ größer gleich 0,5 µm bis kleiner gleich 2,5 µm, besonders bevorzugt größer gleich 1,4 µm bis kleiner gleich 2,0 µm.

Darüber hinaus ist in einer weiteren Ausführungsform der vorliegenden Erfindung eine Rotorwelle besonders bevorzugt, bei der zwischen dem Mischbereich, insbesondere dem zweiten Mischabschnitt, und der Anschlussgeometrie eine ebene kreisringförmige Platte ausgebildet ist, welche das proximale Ende der zentralen Welle und die sich daran anschließende Anschlussgeometrie kreisförmig umschließt. Vorzugsweise ist die kreisringförmige Platte zur Positionierung am proximalen Ende der mindestens einen Mischkammer eines dynamischen Mischers vorgesehen, insbesondere im Bereich der Rotoröffnung eines dynamischen Mischers. Dementsprechend ist die kreisringförmige Platte dazu ausgebildet, die proximal zugeführten, zu mischenden Komponenten zunächst vom Schneckengewinde abzuhalten um einen gewissen Staudruck zu erzeugen und diese anschließend axial in den von den schraubenförmig verlaufenden Gewindeflanken gebildeten Hohlraum einzuführen.

Ebenso können die zu mischenden und durch die kreisringförmige Platte gestauten Komponenten aber auch zunächst in eine Vorkammer eingeführt werden, in welcher der Staudruck weiter erhöht wird und erst anschließend in den von den schraubenförmig verlaufenden Gewindeflanken gebildeten Hohlraum gelangen. Vorzugsweise ist hierfür die ebene kreisringförmige Platte zu den schraubenförmig verlaufenden Gewindeflanken des Schneckengewindes im zweiten Mischabschnitt beabstandet angeordnet ist. Insbesondere beträgt der Abstand zwischen dem proximalen Ende des Schraubengewindes und der kreisringförmigen Platte, gemessen entlang der Längsachse der zentralen Welle, größer gleich 0,1 mm bis kleiner gleich 100 mm, bevorzugt größer gleich 1 mm bis kleiner gleich 50 mm, besonders bevorzugt größer gleich 10 mm bis kleiner gleich 25 mm. In diesem Sinne umfasst die zentrale Welle vorzugsweise mindestens einen Abschnitt, insbesondere im Bereich des proximalem Endes der zentralen Welle, der keine Mischelemente aufweist.

Die kreisringförmige Platte ist vorzugsweise orthogonal zur Längsachse der zentralen Welle und/oder zur Längsachse der Rotorwelle ausgerichtet.

In einer weiter bevorzugten Ausführungsform der vorliegenden Erfindung ist die Rotorwelle, insbesondere der Mischbereich und/oder die Anschlussgeometrie sowie optional die kreisringförmige Platte, ein Spritzgussteil. Alternativ wurde die Rotorwelle, insbesondere der Mischbereich und/oder die Anschlussgeometrie sowie optional die kreisringförmige Platte in einem generativen, Material-aufbauenden Verfahren hergestellt. Dabei sind der Mischbereich und die Anschlussgeometrie und optional die kreisringförmige Platte vorzugsweise materialeinstückig ausgebildet.

Vorzugsweise ist die Rotorwelle, insbesondere der Mischbereich der Rotorwelle, aus einem Material mit guten Gleiteigenschaften hergestellt. Dies umfasst insbesondere ein polymeres Material mit guten Gleiteigenschaften, wie POM (Polyoxymethylen), PA (Polyamid), PC (Polycarbonat), PE (Polyethylen), PP (Polypropylen), PEEK (Polyetheretherketon), PAEK (Polyaryletherketon) und/oder Gemische dieser. Dabei ist es erfindungsgemäß besonders bevorzugt, wenn die Rotorwelle, insbesondere der Mischbereich der Rotorwelle, aus POM hergestellt ist. Optional können die zuvor genannten Materialien zudem faserverstärkt sein. Erfindungsgemäß weiter bevorzugt ist daher die Rotorwelle aus einem faserverstärkten Kunststoff bzw. faserverstärktem polymeren Material bzw. aus einem Faser-KunststoffVerbund hergestellt.

Gleichfalls Gegenstand der vorliegenden Erfindung ist ein dynamischer Mischer, insbesondere ein dentaler dynamischer Mischer, zum Mischen niedrig- bis hochviskoser Komponenten, insbesondere von mindestens zwei niedrig- bis hochviskosen Dentalmaterialien, umfassend eine erfindungsgemäße Rotorwelle, umfassend einen Mischbereich und eine sich an den Mischbereich anschließende Anschlussgeometrie, wobei der Mischbereich eine zentrale Welle mit einem distalen Ende und einem an die Anschlussgeometrie angrenzenden, proximalen Ende umfasst und mindestens zwei Mischabschnitte aufweist, wobei ein erster Mischabschnitt mindestens zwei auf der Oberfläche der zentralen Welle radial ausgerichtete Mischflügel und ein zweiter Mischabschnitt mindestens ein Schneckengewinde mit mindestens zwei schraubenförmig verlaufenden Gewindeflanken umfasst, wobei die schraubenförmig verlaufenden Gewindeflanken die Oberfläche der zentralen Welle peripher umwinden, und wobei der dynamische Mischer ein Gehäuse umfassend einen Gehäusekörper mit mindestens einer Auslassöffnung und einen den Gehäusekörper verschließenden Deckel mit mindestens zwei Einlassöffnungen zur Einbringung der zu mischenden Komponenten sowie eine Rotoröffnung umfasst, wobei die Rotorwelle mit ihrem Mischbereich rotierbar innerhalb des Gehäuses angeordnet ist und die Rotoröffnung zur Aufnahme der Anschlussgeometrie der Rotorwelle vorgesehen ist, wobei das Gehäuse mindestens eine im Gehäusekörper angeordnete Hauptmischkammer sowie mindestens eine im Gehäusekörper und/oder im Deckel angeordnete Vormischkammer umfasst, wobei der erste Mischabschnitt der Rotorwelle innerhalb der Hauptmischkammer und der zweite Mischabschnitt der Rotorwelle innerhalb der Vormischkammer angeordnet ist.

Das Gehäuse des erfindungsgemäßen dynamischen Mischers ist vorzugsweise im Wesentlichen zylinderförmig, insbesondere mit verschiedenen, vorzugsweise konisch ineinander mündenden zylinderförmigen Abschnitten, ausgestaltet. Dabei kann der maximale Durchmesser des Gehäuses bzw. der zylinderförmigen Abschnitte des Gehäuses im Bereich von größer gleich 30 mm bis kleiner gleich 50 mm, insbesondere bei 37 ± 1 mm, und der minimale Durchmesser des Gehäuses bzw. der zylinderförmigen Abschnitte des Gehäuses im Bereich von größer gleich 5 mm bis kleiner gleich 10 mm, insbesondere bei 8 ± 0,1 mm, liegen. Die Länge des Gehäuses einschließlich des Gehäusekörpers und des Deckels, insbesondere von Eintrittsöffnung(en) bis Austrittsöffnung(en), beträgt vorzugsweise größer gleich 40 mm bis kleiner gleich 70 mm, insbesondere 58,3 ± 1 mm. Das Gehäuse bzw. der Gehäusekörper und/oder der Deckel ist vorzugsweise aus einem spritzbaren Kunststoff wie Polyethylen, Polypropylen und/oder Polystyrol oder für den Fall der Herstellung zäherer Mischungen aus hochwertigerer Kunststoffe, insbesondere aus Polyamid, Polyoxymethylen und/oder anderen schlagzäheren Polymeren oder Polymerblends, hergestellt.

Vorzugsweise sind der Gehäusekörper und der Deckel passgenau miteinander verbunden, insbesondere formschlüssig miteinander verrastet. Vorzugsweise sind zudem der Gehäusekörper und der Deckel verdrehbar zueinander ausgestaltet. Insbesondere sind der Gehäusekörper und der Deckel zueinander verdrehbar trotz formschlüssiger Verrastung. Dabei ist es erfindungsgemäß besonders bevorzugt, wenn der Deckel den Gehäusekörper dichtend verschließt, insbesondere indem der Deckel eine umlaufende Nut aufweist, in welche eine am Gehäusekörper vorhandene Dichtlippe beim Verrasten des Deckels auf dem Gehäusekörper eingreifen kann.

Der Deckel des Gehäuses ist vorzugsweise ebenfalls im Wesentlichen zylinderförmig ausgebildet und weist einen Durchmesser von größer gleich 35 mm bis kleiner gleich 40 mm, insbesondere von 37 ± 1 mm sowie eine Höhe von größer gleich 5 mm bis kleiner gleich 10 mm, insbesondere von 6,75 ± 0,1 mm, auf. In diesem Sinne besitzt der Deckel von außen betrachtet eine kreisscheibenförmige Basisplatte, welche eine konzentrische Öffnung zur Durchführung der erfindungsgemäßen Rotorwelle sowie mindestens zwei Einlassöffnungen zum Einbringen der zu mischenden Komponenten aufweist.

Die Rotoröffnung wird außenseitig vorzugsweise von einer zylinderförmigen Ausnehmung mit geringfügig größerem Innendurchmesser umrandet und ist zur Aufnahme der Anschlussgeometrie der mit ihrem herausragenden Ende an eine Mischerantriebswelle anschließbaren Rotorwelle vorgesehen. Daher ist es bevorzugt, wenn das Innere der Rotoröffnung entsprechend der polygonalen Geometrie der Anschlussgeometrie ausgebildet ist, insbesondere als Vierkant-, Sechskant- oder Achtkant-Geometrie. Der Innendurchmesser der Rotoröffnung und/oder der diese umrandenden Aufnahme liegt dabei vorzugsweise im Bereich von größer gleich 5 mm bis kleiner gleich 10 mm, insbesondere beträgt der Innendurchmesser der Rotoröffnung 8,25 ± 0,1 mm und der Innendurchmesser der Aufnahme 8,70 ± 0,1 mm.

Die neben der Rotoröffnung in der Basisplatte des Deckels angeordneten, mindestens zwei Einlassöffnungen sind zur Einbringung der mindestens zwei zu mischenden niedrig- bis hochviskosen Komponenten, insbesondere zur gleichzeitigen Einbringung der Basispaste und der Katalysatorpaste, vorgesehen. Dabei ist es bevorzugt, wenn die mindestens zwei Einlassöffnungen an gegenüberliegenden Seiten der Rotoröffnung angeordnet und ferner unterschiedlich groß ausgebildet sind. So kann über eine Einlassöffnung mit einem größeren Innendurchmesser eine Komponente mit einem höheren Volumenanteil und über die Einlassöffnung mit einem kleineren Innendurchmesser eine Komponente mit einem geringeren Volumenanteil zum Mischen eingebracht werden. Vorzugsweise beträgt dabei das Verhältnis des Volumens der über die größere Einlassöffnung eingebrachten Komponente zum Volumen der über die kleinere Einlassöffnung eingebrachten Komponente 10 : 1 bis 2 : 1, bevorzugt 8 : 1 bis 2 : 1, besonders bevorzugt 6 : 1 bis 3 : 1, insbesondere 5 : 1.

Die Einlassöffnungen werden außenseitig vorzugsweise von jeweils einer zylinderförmigen Aufnahme mit einem entsprechend größeren Innendurchmesser umrandet, welche zum Anschluss einer oder mehrerer die zu mischenden Komponenten enthaltenden Kartusche(n) vorgesehen ist. So ist es bevorzugt, wenn der Innendurchmesser der größeren Einlassöffnung im Bereich von größer gleich 5 mm bis kleiner gleich 8 mm, insbesondere bei 6,8 ± 0,1 mm, und der Außendurchmesser der die größere Einlassöffnung umrandenden Aufnahme im Bereich von größer gleich 10 mm bis kleiner gleich 13 mm, insbesondere bei 11,2 ± 0,1 mm, liegt. Ebenso ist es bevorzugt, wenn der Innendurchmesser der kleineren Einlassöffnung im Bereich von größer gleich 1,5 mm bis kleiner gleich 4,5 mm, insbesondere bei 3 ± 0,1 mm, und der Innendurchmesser der die kleinere Einlassöffnung umrandenden Aufnahme im Bereich von größer gleich 4,5 mm bis kleiner gleich 7,5 mm, insbesondere bei 6 ± 0,1 mm, liegt.

Darüber hinaus kann der Deckel, insbesondere außenseitig auf der kreisscheibenförmige Basisplatte, eine Führungsschiene aufweisen, welche zur Vorzentrierung der einen oder mehreren die zu mischenden Komponenten enthaltenden Kartusche(n) vorgesehen ist. Die Führungsscheine ist vorzugsweise in Randnähe und mittig in Bezug auf die mindestens zwei Einlassöffnungen angeordnet.

Der mit dem Deckel verbundene Gehäusekörper des Gehäuses ist vorzugsweise ebenfalls im Wesentlichen zylinderförmig ausgebildet und weist einen maximalen Durchmesser von größer gleich 30 mm bis kleiner gleich 45 mm, insbesondere von 37 ± 1 mm, und einen minimalen Durchmesser von größer gleich 5 mm bis kleiner gleich 10 mm, insbesondere von 8 ± 0,1 mm, sowie eine Länge von größer gleich 40 mm bis kleiner gleich 50 mm, insbesondere von 45,95 ± 1 mm, auf. Der Gehäusekörper umfasst dabei vorzugsweise mindestens zwei Zylinderabschnitte, insbesondere mindestens drei Zylinderabschnitte. So ist es bevorzugt, wenn sich an den Deckel zunächst ein sich konisch verjüngender, erster Übergangsabschnitt anschließt, welcher in einem ersten Zylinderabschnitt mündet. Dabei bildet der von den inneren Wandungen des ersten Übergangsabschnitts und/oder des ersten Zylinderabschnitts begrenzte Innenraum die Vormischkammer, welche zur Vormischung der Komponenten hinsichtlich einer globalen Homogenisierung des Gemisches vorgesehen ist. Weiterhin ist es bevorzugt, wenn sich an den ersten Zylinderabschnitt nach einer weiteren konischen Verjüngung ein zweiter Zylinderabschnitt anschließt, welcher wiederum in einem sich konisch verjüngenden, zweiten Übergangsabschnitt und schließlich in der Auslassöffnung als drittem Zylinderabschnitt mündet. Dabei bildet der von den inneren Wandungen des zweiten Zylinderabschnitts und/oder des zweiten Übergangsabschnitts begrenzte Innenraum die Hauptmischkammer, welche zum Durchmischen der Komponenten auf lokaler Ebene vorgesehen ist. Die Vormischkammer und die Hauptmischkammer können sowohl zusammenhängend ausgebildet sein, als auch getrennt voneinander vorliegen, wobei in letzterem Fall mindestens ein Materialkanal, insbesondere mindestens zwei einzelne Materialkanäle, zur Verbindung der Vormischkammer und der Hauptmischkammer innerhalb des Gehäusekörpers vorgesehen ist.

Das Verhältnis des Volumens der Vormischkammer zum Volumen der Hauptmischkammer liegt dabei vorzugsweise im Bereich von 1 : 2 bis 2 : 1, bevorzugt im Bereich von 2 : 3 bis 3 : 2, besonders bevorzugt bei etwa 1 : 1. Insbesondere beträgt das Volumen der Vormischkammer größer gleich 2000 mm³ bis kleiner gleich 4000 mm³, bevorzugt größer gleich 3000 mm³ bis kleiner gleich 3500 mm³, besonders bevorzugt größer gleich 3100 mm³ bis kleiner gleich 3300 mm³, insbesondere 3200 ± 100 mm³, und/oder das Volumen der Hauptmischkammer größer gleich 2500 mm³ bis kleiner gleich 4500 mm³, bevorzugt größer gleich 3000 mm³ bis kleiner gleich 4000 mm³, besondere bevorzugt größer 3500 mm³ bis kleiner gleich 3800 mm³, insbesondere 3650 ± 100 mm³. Vorzugsweise ist das Volumen der Vormischkammer in etwa gleich dem Volumen der Hauptmischkammer.

Zudem liegt insbesondere das Verhältnis des vom zweiten Mischabschnitt belassenen Freiraums zu dem vom ersten Mischabschnitt belassenen Freiraum im Bereichsintervall von 2 : 1 bis 1 : 2, bevorzugt im Bereichsintervall von 3 : 2 bis 2 : 3, besonderes bevorzugt bei etwa 1 : 1. Dabei wird unter dem jeweils belassenen Freiraum dasjenige Volumen verstanden, dass von der zentralen Welle sowie dem Schneckengewinde des ersten Mischabschnitts in Bezug auf die Vormischkammer bzw. von der zentralen Welle sowie den Mischflügeln des zweiten Mischabschnitts in Bezug auf die Hauptmischkammer nicht eingenommen wird. Dieses Volumen des belassenen Freiraums beträgt im Falle des ersten Mischabschnitts und/oder im Falle des zweiten Mischabschnitts vorzugsweise größer gleich 2000 mm³ bis kleiner gleich 3000 mm³, insbesondere 2500 ± 100 mm³.

In diesem Sinne ist es bevorzugt, wenn der Innendurchmesser des ersten Zylinderabschnitts größer gleich 15 mm bis kleiner gleich 25 mm, insbesondere 17 ± 1 mm, und die Länge des ersten Zylinderabschnitts größer gleich 5 mm bis kleiner gleich 10 mm, insbesondere 8,51 ± 0,1 mm, und/oder der Innendurchmesser des zweiten Zylinderabschnitts größer gleich 10 mm bis kleiner gleich 20 mm, insbesondere 13,6 ± 1 mm, und die Länge des zweiten Zylinderabschnitts größer gleich 15 mm bis kleiner gleich 25 mm, insbesondere 21,19 ± 0,1 mm, und/oder der Durchmesser des dritten Zylinderabschnitts (Auslassöffnung) größer gleich 5 mm bis kleiner gleich 10 mm, insbesondere 8 ± 0,1 mm, und die Länge des dritten Zylinderabschnitts (Auslassöffnung) größer gleich 3 mm bis kleiner gleich 7 mm, insbesondere 4,93 ± 0,1 mm, beträgt.

Neben der Vormischkammer und der Hauptmischkammer kann das Gehäuse zudem mindestens eine Vorkammer zur Erhöhung des Staudrucks der anschließend in die Vormischkammer eintretenden Komponenten aufweisen. Demgemäß kann es erfindungsgemäß weiter bevorzugt sein, wenn das Gehäuse eine im Gehäusekörper und/oder im Deckel angeordnete Vorkammer umfasst, innerhalb welcher das proximale Ende der zentralen Welle angeordnet ist. In der Vorkammer findet vorzugsweise keine Vermischung der Komponenten statt, so dass es insbesondere bevorzugt ist, wenn die zentrale Welle an ihrem proximalen Ende keine Mischelemente aufweist. Besonders bevorzugt ist die Vorkammer dabei zwischen den mindestens zwei Einlassöffnungen zur Einbringung der zu mischenden Komponenten bzw. der Rotoröffnung und der mindestens einen Vormischkammer angeordnet.

Das Verhältnis des Volumens der Vorkammer zum Gesamtvolumen der Vormischkammer und Hauptmischkammer liegt dabei vorzugsweise im Bereich von 1 : 10 bis 2 : 3, bevorzugt im Bereich von 1 : 5 bis 2 : 5, besonders bevorzugt bei etwa 1 : 3. Insbesondere beträgt das Volumen der Vorkammer größer gleich 100 mm³ bis kleiner gleich 3000 mm³, bevorzugt größer gleich 500 mm³ bis kleiner gleich 2400 mm³, besonders bevorzugt größer gleich 1000 mm³ bis kleiner gleich 1800 mm³, insbesondere 1200 ± 100 mm³. Dabei ist es besonders bevorzugt, wenn die Vorkammer durch von den inneren Wandungen des ersten Übergangsabschnitts begrenzten Innenraum gebildet wird.

Der durch die konische Verjüngung zwischen dem zweiten Zylinderabschnitt und dem dritten Zylinderabschnitt erzeugte Innenwinkel des zweiten Übergangsabschnitts liegt vorzugsweise bei größer gleich 120° bis kleiner gleich 150°, insbesondere bei etwa 135°. Entsprechend beträgt der Außenwinkel des trapezförmig zulaufenden ersten Mischflügels im ersten Mischabschnitt der innerhalb des Gehäuses angeordneten Rotorwelle größer gleich 210° bis kleiner gleich 240°, insbesondere 225°. Somit ist es erfindungsgemäß bevorzugt, wenn die Rotorwelle derart innerhalb des Gehäuses des dynamischen Mischers angeordnet ist, dass die Mischflügel des ersten Mischabschnitts an die inneren Wandungen der Hauptmischkammer und/oder das Schneckengewinde des zweiten Mischabschnitts an die inneren Wandungen der Vormischkammer angepasst sind. Insbesondere sind die Mischflügel des ersten Mischabschnitts und/oder das Schneckengewinde des zweiten Mischabschnitts als nicht wandgängig innerhalb des Gehäuses des dynamischen Mischers vorgesehen und halten somit einen gewissen Abstand zu den jeweiligen Wandungen ein.

Daher beträgt in einer besonders bevorzugten Ausführungsform des dynamischen Mischers das Schneckenspiel zwischen dem Schneckengewinde des zweiten Mischabschnitts und den inneren Wandungen der Vormischkammer größer gleich 0,01 mm bis kleiner gleich 1 mm, vorzugsweise größer gleich 0,1 mm bis kleiner gleich 0,5 mm, insbesondere beträgt das Schneckenspiel 0,2 ± 0,05 mm. Als Schneckenspiel wird dementsprechend im Rahmen der vorliegend Erfindung der Abstand zwischen den Gewindeflanken des Schneckengewindes und den inneren Wandungen des Gehäuses des dynamischen Mischers verstanden, insbesondere die Hälfte der Differenz aus dem Innendurchmesser der Vormischkammer und dem Schneckendurchmesser des Schneckengewindes. Das Schneckenspiel ist erfindungsgemäß so gewählt, dass die zu mischenden Komponenten nahezu ausschließlich über das Schneckengewinde gefördert werden und nicht axial an diesem vorbeifließen können, jedoch gleichzeitig eine Abnutzung der inneren Wandungen des Gehäuses des dynamischen Mischers verhindert wird. Dies gilt ebenso für den Abstand, der von den Mischflügeln zu den inneren Wandungen des dynamischen Mischers eingehalten wird.

Ein weiterer Gegenstand der vorliegenden Erfindung ist schließlich die Verwendung eines erfindungsgemäßen dynamischen Mischers, insbesondere eines dentalen dynamischen Mischers, vorzugsweise umfassend die erfindungsgemäße Rotorwelle, zum Mischen von mindestens zwei niedrig- bis hochviskosen Komponenten. Dabei handelt es sich bei den mindestens zwei niedrig- bis hochviskosen Komponenten vorzugsweise um mindestens zwei niedrig- bis hochviskosen Dentalmaterialien, insbesondere 2-komponentige (2K-) Dentalmaterialien, wie 2K-Kunststoffe oder 2K-Kleber. Als 2K-Kleber, 3K-Kunstsoffe gelten Zusammensetzungen, die zur Aushärtung aus zwei unterschiedlichen Komponenten vor der Applikation gemischt werden. Insbesondere handelt es sich um mindestens zwei pastöse Dentalmaterialien, wie eine Basispaste und eine Katalysatorpaste eines 2-komponentigen (2K-) Abformmaterials.

Die Erfindung wird anhand der Figuren näher erläutert, ohne die Erfindung auf diese Ausführungsbeispiele zu begrenzen. Es zeigen:
- **Fig. 1a,b,c:**: je eine erfindungsgemäße Rotorwelle **1** mit einem Mischbereich **2** und einer Anschlussgeometrie **3**
- **Fig.2:**: eine erfindungsgemäße Rotorwelle **1** mit einem ersten Mischabschnitt **21** und einem zweiten Mischabschnitt **22**
- **Fig. 3:**: ein erfindungsgemäßer dynamischer Mischer **0** zum Mischen niedrig- bis hochviskoser Komponenten in der Außenansicht
- **Fig. 4:**: eine Schnittdarstellung eines erfindungsgemäßen dynamischen Mischers **0** umfassend die erfindungsgemäße Rotorwelle **1**

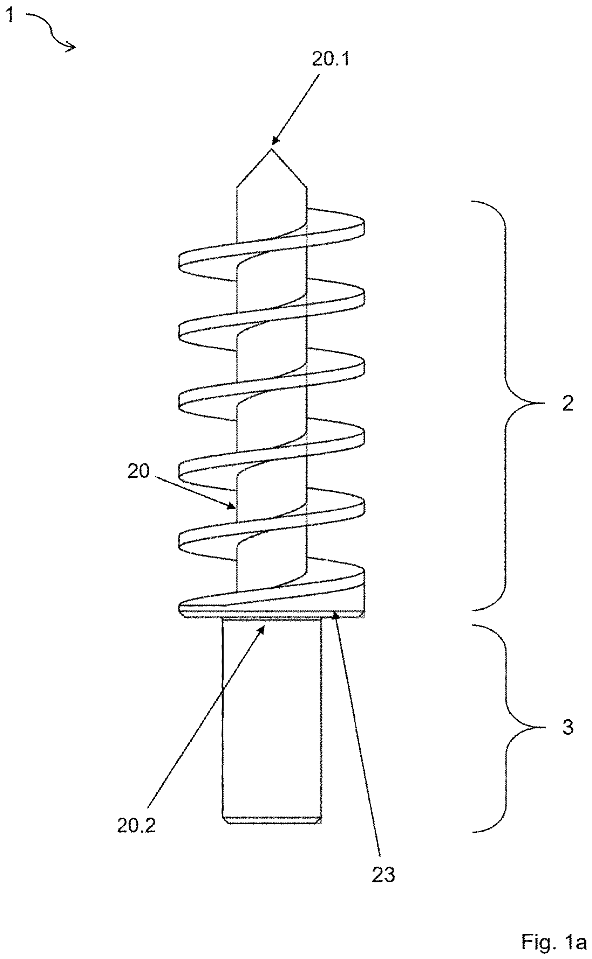

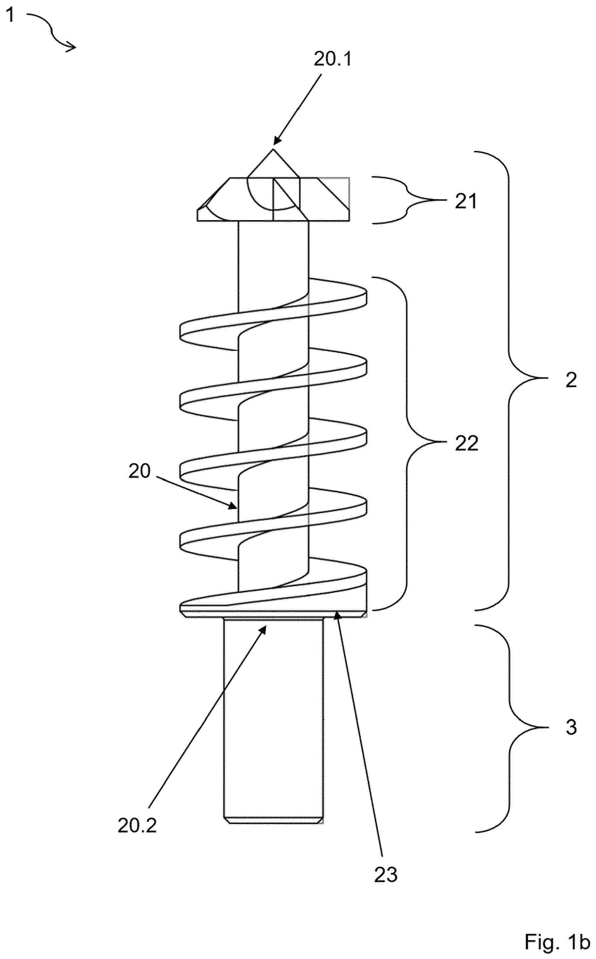

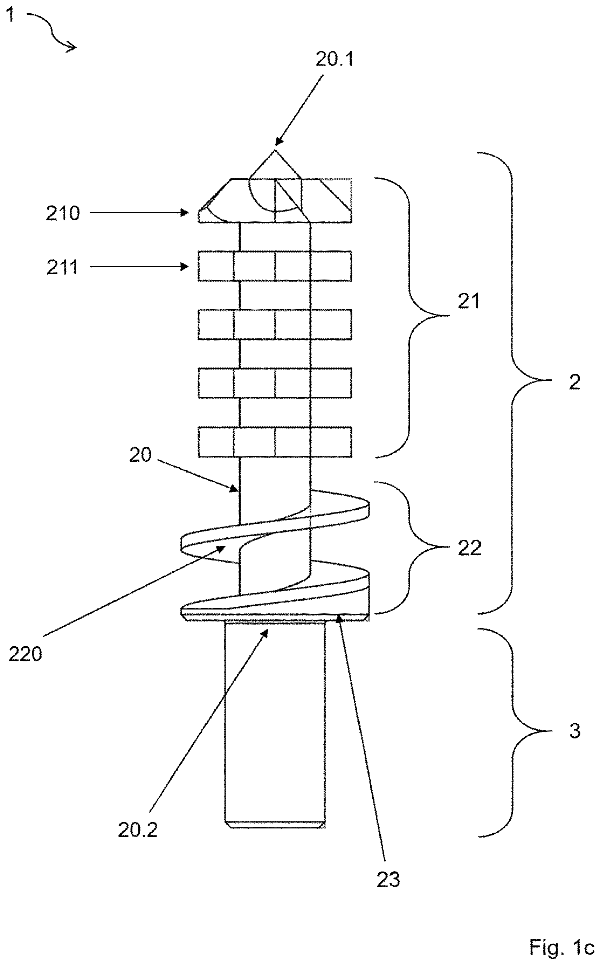

Die **Figuren 1a****,** **1****b** und **1c** zeigen je eine erfindungsgemäße Rotorwelle **1** für einen dynamischen Mischer zum Mischen niedrig- bis hochviskoser Komponenten.

**Figur 1a** stellt eine seitliche Gesamtansicht einer ersten Ausführungsform der erfindungsgemäßen Rotorwelle **1** dar. Die Rotorwelle **1** ist unterteilt in einen Mischbereich **2,** welcher ein Schneckengewinde mit sechs schraubenförmig verlaufenden Gewindeflanken umfasst, und eine sich an den Mischbereich **2** anschließende Anschlussgeometrie **3.** Der Mischbereich **2** umfasst eine zentrale Welle **20** mit einem konisch zulaufenden, distalen Ende **20.1** und einem an die Anschlussgeometrie **3** angrenzenden, proximalen Ende **20.2.** Zwischen dem Mischbereich **2** und der Anschlussgeometrie 3 ist eine ebene kreisringförmige Platte **23** ausgebildet.

**Figur 1b** stellt eine seitliche Gesamtansicht einer weiteren Ausführungsform der erfindungsgemäßen Rotorwelle **1** dar. Die Rotorwelle **1** ist unterteilt in einen Mischbereich **2** und eine sich an den Mischbereich **2** anschließende Anschlussgeometrie **3.** Der Mischbereich **2** umfasst eine zentrale Welle **20** mit einem konisch zulaufenden, distalen Ende **20.1** und einem an die Anschlussgeometrie **3** angrenzenden, proximalen Ende **20.2.** Darüber hinaus weist der Mischbereich zwei verschiedene Mischabschnitte **21** und **22** auf, wobei der erste Mischabschnitt **21** einen auf der Oberfläche der zentralen Welle **20** radial ausgerichteten Mischflügel und der zweite Mischabschnitt **22** ein Schneckengewinde mit fünf schraubenförmig verlaufenden Gewindeflanken umfasst. Zwischen dem zweiten Mischabschnitt **22** und der Anschlussgeometrie **3** ist eine ebene kreisringförmige Platte **23** ausgebildet.

**Figur 1c** stellt eine seitliche Gesamtansicht einer besonders bevorzugten Ausführungsform der erfindungsgemäßen Rotorwelle **1** dar. Die Rotorwelle **1** ist unterteilt in einen Mischbereich **2** und eine sich an den Mischbereich **2** anschließende Anschlussgeometrie **3,** welche zur Kopplung an eine Mischerantriebswelle vorgesehen ist. Der Mischbereich **2** umfasst eine zentrale Welle **20** mit einem konisch zulaufenden, distalen Ende **20.1** und einem an die Anschlussgeometrie **3** angrenzenden, proximalen Ende **20.2.** Darüber hinaus weist der Mischbereich zwei verschiedene, zueinander beabstandete Mischabschnitte **21** und **22** auf, wobei der erste Mischabschnitt **21** in Richtung des proximalen Endes **20.1** der zentralen Welle **20** und der zweite Mischabschnitt **22** in Richtung des distalen Endes **20.2** der zentralen Welle **20** angeordnet ist. Zwischen dem zweiten Mischabschnitt **22** und der Anschlussgeometrie **3** ist eine ebene kreisringförmige Platte **23** ausgebildet, welche das proximale Ende **20.2** der zentralen Welle **20** und die sich daran anschließende Anschlussgeometrie **3** kreisförmig umschließt.

Der erste Mischabschnitt **21** umfasst insgesamt fünf auf der Oberfläche der zentralen Welle **20** radial ausgerichtete Mischflügel, von denen der erste Mischflügel **210** am proximalen Ende **20.1** der zentralen Welle **20** und der zweite Mischflügel **211** in Bezug auf die Längsachse der zentralen Welle **20** dahinter angeordnet ist. Die Mischflügel umfassen jeweils vier Mischflügelsegmente (nicht gezeigt), welche um jeweils 90° zueinander gedreht und radial derart versetzt angeordnet sind, dass die freien Durchlässe zwischen den Mischflügelsegmenten eines Mischflügels jeweils durch die Durchlass-freien Teile, also die jeweiligen Mischflügelsegmente. des nachfolgenden Mischflügels abgedeckt werden. Während der zweite Mischflügel **211** sowie die restlichen, dahinter angeordneten Mischflügel eine einheitliche Schichtdicke aufweisen, ist der erste Mischflügel **210** dicker und in Richtung des distalen Endes **20.1** der zentralen Welle **20** trapezförmig zulaufend ausgebildet.

Der zweite Mischabschnitt **22** umfasst ein Schneckengewinde **220** mit zwei schraubenförmig verlaufenden Gewindeflanken, welche die Oberfläche der zentralen Welle **20** peripher umwinden. Das Schneckengewinde **220** ist zum letzten Mischflügel des ersten Mischabschnitts **21** beabstandet angeordnet und windet sich als rechtsgängige Helix in Richtung des proximalen Endes **20.2** der zentralen Welle **20,** wo es an die kreisringförmige Platte **23** anschließt. Bei Rotation der Rotorwelle **1,** werden die zu mischenden niedrig- bis hochviskosen Komponenten seitlich an der kreisringförmigen Platte **23** vorbei in den von der ersten schraubenförmig verlaufenden Gewindeflanke gebildeten Hohlraum eingeführt und von dort aus durch das Schneckengewinde **220** weitertransportiert.

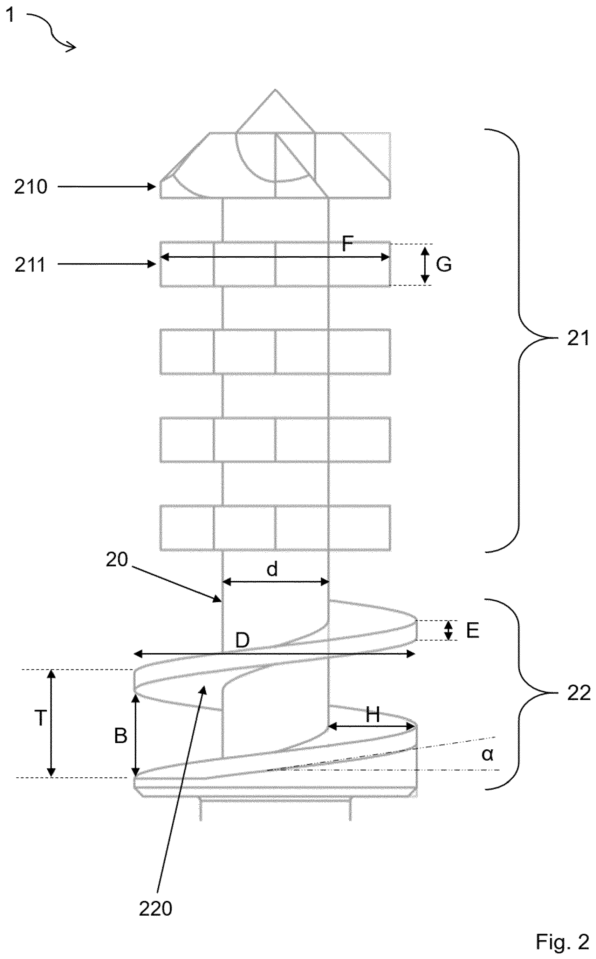

**Figur 2** stellt einen Ausschnitt der in Figur 1c gezeigten Gesamtansicht der Rotorwelle **1** mit Fokus auf den ersten Mischabschnitt **21** und den zweiten Mischabschnitt **22** dar. Der erste Mischabschnitt **21** umfasst insgesamt fünf auf der Oberfläche der zentralen Welle **20** radial ausgerichtete Mischflügel (erster Mischflügel **210,** zweiter Mischflügel **211)** und der zweite Mischabschnitt **22** umfasst ein Schneckengewinde **220** mit zwei schraubenförmig verlaufenden Gewindeflanken, welche die Oberfläche der zentralen Welle **20** peripher umwinden.

Der Durchmesser **d** der zentralen Welle **20** stellt gleichzeitig den Kerndurchmesser des Schneckengewindes **220** dar. Er ist im ersten Mischabschnitt **21** und im zweiten Mischabschnitt **22** einheitlich gewählt und beträgt ca. 6 mm.

Der Durchmesser **D** ist der Schneckendurchmesser des Schneckengewindes **220** des zweiten Mischabschnitts **22** und entspricht dem Durchmesser eines fiktiven Zylinders, welcher durch die Rotation der peripheren Ränder der schraubenförmig verlaufenden Gewindeflanken des Schneckengewindes **220** zustande kommen würde. Er beträgt ca. 16 mm. Die halbe Differenz aus dem Schneckendurchmesser **D** und dem Durchmesser d der zentralen Welle **20** ergibt die Gangtiefe **H,** welche ca. 5 mm beträgt. Die Schichtdicke der jeweiligen Gewindeflanken ist als Stegbreite **E** angegeben und beträgt ca. 1 mm. Darüber hinaus ist das Schneckengewinde **220** des zweiten Mischabschnitts **22** durch die Ganghöhe T, welche die Strecke einer vollen Umdrehung der Gewindeflanken entlang der Längsachse der zentralen Welle **20** angibt und ca. 5 mm beträgt, sowie den Gangwinkel **α,** welcher dem Steigungswinkel der Gewindeflanken in Bezug auf die Längsachse der zentralen Welle **20** entspricht und ca. 9° beträgt, gekennzeichnet. Die Gangbreite **B** schließlich ergibt sich aus der Differenz aus der Ganghöhe **T** und der Stegbreite **E** und beträgt ca. 5 mm.

Der Durchmesser **F** ist der Flügeldurchmesser der Mischflügel (erster Mischflügel **210,** zweiter Mischflügel **211)** des ersten Mischabschnitts **21** und entspricht dem Durchmesser eines fiktiven Zylinders, welcher durch die Rotation der peripheren Ränder der Mischflügel zustande kommen würde. Er beträgt ca. 13 mm. Die Schichtdicke der jeweiligen Mischflügel ist als Flügelbreite **G** angegeben und beträgt ca. 3,7 mm für den ersten Mischflüge **210** und ca. 2,5 mm für den zweiten Mischflügel **211** wie auch für die restlichen Mischflügel des ersten Mischabschnitts **21.** Die einzelnen Mischflügel weisen zueinander einen Abstand von ca. 2,5 mm auf.

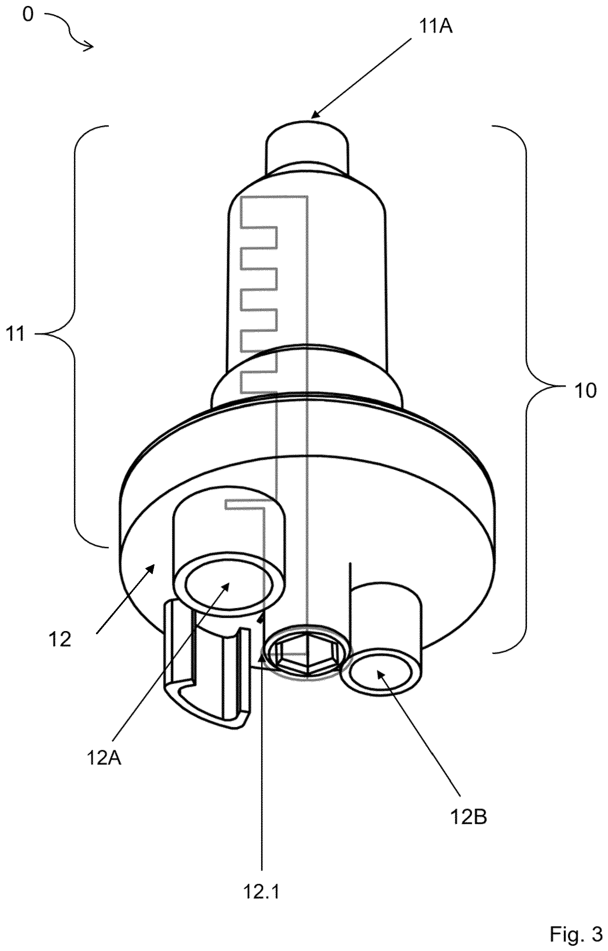

**Figur 3** zeigt eine Außenansicht eines erfindungsgemäßen dynamischen Mischers **0** in Untersicht, wobei die Lage der in ihrem Inneren befindlichen Rotorwelle lediglich angedeutet ist. Der dynamische Mischer **0** umfasst ein Gehäuse **10** mit einem Gehäusekörper **11** und einem den Gehäusekörper **11** dichtend verschließenden Deckel **12.**

Der zylinderförmig ausgebildete Deckel **12** weist eine kreisscheibenförmige Basisplatte mit einer konzentrischen Rotoröffnung **12.1** auf, deren innenliegende Sechskantgeometrie zur Aufnahme der Anschlussgeometrie der Rotorwelle vorgesehen ist. Die Rotoröffnung **12.1** wird außenseitig von einer zylinderförmigen Aufnahme mit geringfügig größerem Innendurchmesser umrandet. In der Basisplatte des Deckels **12** befinden sich ferner zwei, neben der Rotoröffnung **12.1** einander gegenüberliegende Einlassöffnungen **12A** und **12B** zur Einbringung der zu mischenden niedrig- bis hochviskosen Komponenten. Die Einlassöffnungen **12A** und **12B** sind unterschiedlich groß ausgebildet, um beim Einbringen der zu mischenden Komponenten eine Komponente mit einem größeren Volumenanteil (Einlassöffnung **12A)** und eine Komponente mit einem kleineren Volumenanteil (Einlassöffnung **12B)** bereitstellen zu können. Außenseitig sind die Einlassöffnungen **12A** und **12B** jeweils mit einer zylinderförmigen Aufnahme zur Befestigung der die jeweiligen Komponenten enthaltenden Kartusche(n) umrandet. Dabei ist die Aufnahme der größeren Einlassöffnung **12A** geringfügig größer und die Aufnahme der kleineren Einlassöffnung **12B** deutlich größer als deren jeweiliger Durchmesser ausgebildet. Überdies umfasst der Deckel **12** an seiner Außenseite eine zum Vorzentrieren der die jeweiligen Komponenten enthaltenden Kartusche(n) vorgesehene Führungsschiene.

Am distalen Ende des Gehäuses **11** ist eine zylinderförmige Auslassöffnung **11A** zur Ausbringung der über die Einlassöffnungen **12A** und **12B** eingebrachten und nunmehr gemischten niedrig- bis hochviskosen Komponenten ausgebildet.

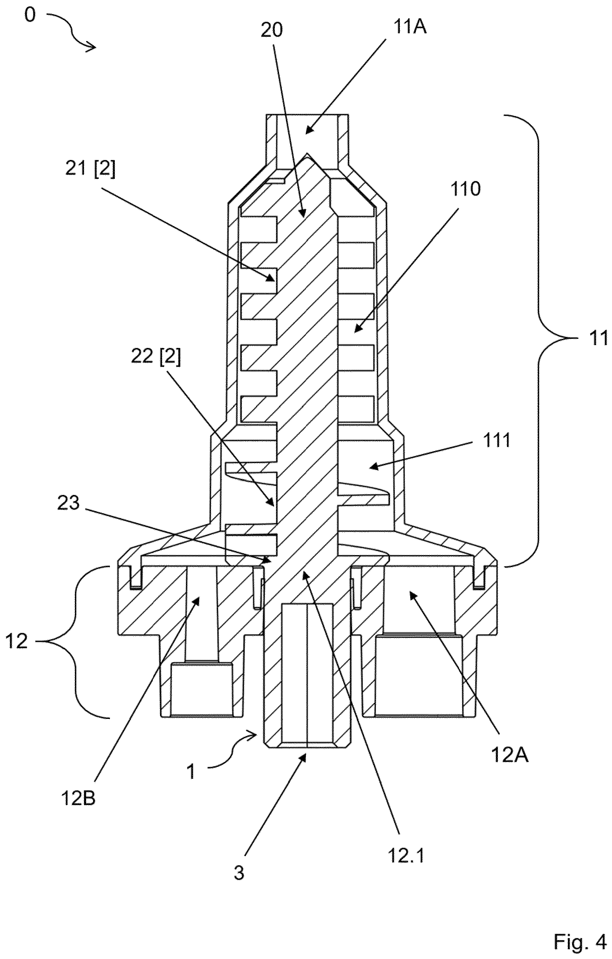

**Figur 4** zeigt einen Querschnitt durch einen erfindungsgemäßen dynamischen Mischer 0 mit einer darin rotierbar gelagerten erfindungsgemäßen Rotorwelle **1.**

Der dynamische Mischer **0** umfasst einen Gehäusekörper **11,** welcher durch einen Deckel **12** an seinem proximalen Ende dichtend verschließbar ist. Dabei greift eine zylinderförmig ausgestaltete Dichtlippe des Gehäusekörpers **11** in eine entsprechende Nut des Deckels **12** ein, während Gehäusekörper **11** und Deckel **12** formschlüssig miteinander verrasten. Hinter der Dichtlippe des Gehäusekörpers **11** schließt sich ein sich konisch verjüngender Übergangsabschnitt an, welcher in einen axial verlaufenden kurzen Zylinderabschnitt mündet.

Der von den inneren Wandungen des Übergangsabschnitts sowie des kurzen Zylinderabschnitts des Gehäusekörpers **11** begrenzte Innenraum bildet eine Vormischkammer **111,** welche zur Vormischung der zu mischenden Komponenten hinsichtlich einer globalen Homogenisierung des Gemisches vorgesehen ist. Hinter dem kurzen Zylinderabschnitt schließt sich nach kurzer konischer Verjüngung ein langer Zylinderabschnitt des Gehäusekörpers **11** mit einem geringeren Innendurchmesser an, dessen innere Wandungen einen Innenraum begrenzen, welcher einer Hauptmischkammer **110** entspricht und zum Durchmischen der Komponenten auf lokaler Ebene vorgesehen ist. Am distalen Ende des Gehäusekörpers **11** ist nach einer weiteren konischen Verjüngung schließlich eine zylinderförmige Auslassöffnung **11A** angeordnet.

Die Rotorwelle **1** ist im Inneren des dynamischen Mischers **0** angeordnet, wobei das distale Ende der zentralen Welle **20** im Bereich der Auslassöffnung **11A** des Gehäusekörpers **11** gelegen ist und die Anschlussgeometrie **3,** welche zur Kopplung an eine Mischerantriebswelle (nicht gezeigt) vorgesehen ist, durch die Rotoröffnung **12.1** sowie die zugehörige Aufnahme des Deckels **12** ragt. Der Mischbereich **2** der Rotorwelle **1** ist derart im Gehäusekörper **11** des dynamischen Mischers **0** angeordnet, dass sich der erste Mischabschnitt **21** des Mischbereichs **2** innerhalb der Hauptmischkammer **110** und der zweite Mischabschnitt **22** des Mischbereichs **2** innerhalb der Vormischkammer **111** befindet. Dabei werden die inneren Wandungen der Vormischkammer **111** und der Hauptmischkammer **110** weder durch die Mischflügel im ersten Mischabschnitt **21,** noch durch die Gewindeflanken des Schneckengewindes im zweiten Mischabschnitt **22** berührt.

Beim Mischvorgang wird die Komponente mit dem größeren Volumenanteil durch die größere Einlassöffnung **12A** und die Komponente mit dem kleineren Volumenanteil durch die kleinere Einlassöffnung **12B** in die Vormischkammer **111** gedrückt. Die kreisringförmige Platte **23,** welche im Übergangsbereich zwischen dem Deckel **12** und dem Gehäusekörper **11** angeordnet ist, dient dabei der Konzentrationsregelung und Vormischung der Komponenten, indem die proximal zugeführten Komponenten zunächst vom Schneckengewinde abgehalten und anschließend axial an der kreisringförmigen Platte **23** vorbei in den ersten von den schraubenförmig verlaufenden Gewindeflanken gebildeten Hohlraum des Schneckengewindes im zweiten Mischabschnitt **22** eingeführt werden. Die Komponenten werden daraufhin durch die Gewindeflanken des Schneckengewindes im zweiten Mischabschnitt **22** weiter transportiert, wobei es vorgesehen ist, dass die Vormischkammer **111** nahezu vollständig mit den zugeführten Komponenten gefüllt ist, bevor diese in die Hauptmischkammer **110** gelangen. So werden die Komponenten durch die Schneckengeometrie des zweiten Mischabschnitts **22** an einem schnellen Durchfließen gehindert, was den Staudruck erhöht und zu einer globalen Homogenisierung des Gemisches führt. Gleichzeitig wird durch die Drehbewegung der Gewindeflanken des Schneckengewindes eine axiale Förderbewegung in den in der Hauptmischkammer **110** gelegenen ersten Mischabschnitt **21** unterstützt. In der Hauptmischkammer **110** sorgen die Mischflügel des ersten Mischabschnitts **21** für eine weitere Verwirbelung der vorgemischten Komponenten, wobei die radial versetzte Anordnung der einzelnen Mischflügelsegmente der Mischflügel gewährleistet, dass ein von einem Mischflügel gegebenenfalls nicht erfasster Teil der Komponenten von dem darauf folgenden Mischflügel erfasst, gescherrt und anschließend mit dem restlichen Teil der Komponenten vermischt wird. Überdies bewirken die Mischflügel des ersten Mischabschnitts **21** eine Weiterleitung der gemischten Komponenten in Richtung der Auslassöffnung **11A** des Gehäusekörpers **11,** wo das nunmehr global wie auch lokal homogenisierte Gemisch austreten schließlich kann.

### Bezugszeichen:

- **0**: dynamischer Mischer
- **1**: Rotorwelle
- **10**: Gehäuse des dynamischen Mischers **0**
- **11**: Gehäusekörper
- **11A**: Auslassöffnung im Gehäusekörper **11**
- **110**: Hauptmischkammer im Inneren des Gehäusekörpers **11**
- **111**: Vormischkammer im Inneren des Gehäusekörpers **11**
- **112**: Vorkammer im Inneren des Gehäusekörpers **11**
- **12**: Deckel, der den Gehäusekörper **11** verschließt
- **12A, 12B**: Einlassöffnungen im Deckel **12**
- **12.1**: Rotoröffnung
- **2**: Mischbereich der Rotorwelle **1**
- **20**: zentrale Welle des Mischbereichs **2**
- **20.1, 20.2**: distales Ende bzw. proximales Ende der zentralen Welle **20**
- **21**: erster Mischabschnitt
- **210, 211**: Mischflügel im ersten Mischabschnitt **21**
- **22**: zweiter Mischabschnitt
- **220**: Schneckengewinde mit Gewindeflanken im zweiten Mischabschnitt **22**
- **23**: kreisringförmige Platte
- **3**: Anschlussgeometrie der Rotorwelle **1**
- **d**: Durchmesser der zentralen Welle **20,** entspricht dem Kerndurchmesser des Schneckengewindes **220**
- **B**: Gangbreite des Schneckengewindes **220** (axialer Abstand zwischen zwei Gewindeflanken des Schneckengewindes **220)**
- **D**: Schneckendurchmesser des Schneckengewindes **220** (Durchmesser eines fiktiven Zylinders, hervorgerufen durch Rotation der peripheren Ränder der Gewindeflanken des Schneckengewindes **220)**
- **E**: Stegbreite des Schneckengewindes **220** (Schichtdicke der Gewindeflanke des Schneckengewindes **220)**
- **H**: Gangtiefe des Schneckengewindes **220** (halbe Differenz aus Schneckendurchmesser **D** - Durchmesser **d** der zentralen Welle **20)**
- **T**: Ganghöhe des Schneckengewindes **220** (Summe aus Gangbreite **B** + Stegbreite **E)**
- **α**: Gangwinkel des Schneckengewindes **220** (gleich arctan **T**/2**d)**
- **F**: Flügeldurchmesser der Mischflügel **210, 211** (Durchmesser eines fiktiven Zylinders, hervorgerufen durch Rotation der peripheren Ränder der Mischflügel **210, 211)**
- **G**: Flügelbreite der Mischflügel **210, 211** (Schichtdicke der Mischflügel **210, 211)**

## Patentansprüche

1. Rotorwelle (1) für einen dynamischen Mischer (0) zum Mischen niedrig- bis hochviskoser Komponenten, umfassend einen Mischbereich (2) und eine sich an den Mischbereich (2) anschließende Anschlussgeometrie (3), wobei der Mischbereich (2) eine zentrale Welle (20) mit einem distalen Ende (20.1) und einem an die Anschlussgeometrie (3) angrenzenden, proximalen Ende (20.2) umfasst, der Mischbereich (2) mindestens zwei Mischabschnitte (21, 22) entlang der zentralen Welle (20) aufweist, wobei ein erster Mischabschnitt (21) am distalen Ende (20.1) der zentralen Welle (20) mindestens zwei auf der Oberfläche der zentralen Welle (20) radial ausgerichtete Mischflügel (210, 211) und ein zweiter Mischabschnitt (22) am proximalen Ende (20.2) der zentralen Welle (20) mindestens ein Schneckengewinde (220) mit mindestens zwei schraubenförmig verlaufenden Gewindeflanken umfasst, wobei die schraubenförmig verlaufenden Gewindeflanken die Oberfläche der zentralen Welle (20) peripher umwinden, **dadurch gekennzeichnet, dass** das distale Ende der zentralen Welle (20) konisch zulaufend ausgebildet ist.

2. Rotorwelle (1) nach Anspruch 1, **dadurch gekennzeichnet, dass** die schraubenförmig verlaufenden Gewindeflanken des Schneckengewindes (220) im zweiten Mischabschnitt (22) von den mindestens zwei Mischflügeln (210, 211) im ersten Mischabschnitt (21) beabstandet angeordnet sind.

3. Rotorwelle (1) nach Anspruch 1 oder 2, **dadurch gekennzeichnet, dass** das Verhältnis der Länge des zweiten Mischabschnitts (22) zur Länge des ersten Mischabschnitts (21) im Bereichsintervall von 1 : 4 bis 10 : 1 liegt, bevorzugt im Bereichsintervall von 1 : 3 bis 5 : 1, besonders bevorzugt von 1 : 2,5 bis 2,5 : 1.

4. Rotorwelle (1) nach einem der Ansprüche 1 bis 3, **dadurch gekennzeichnet, dass**
a) der Flügeldurchmesser F der Mischflügel (210, 211) des ersten Mischabschnitts (21) größer gleich 10 mm bis kleiner gleich 20 mm, insbesondere größer gleich 11 mm bis kleiner gleich 15 mm, beträgt, und/oder
b) der Schneckendurchmesser D des Schneckengewindes (220) des zweiten Mischabschnitts (22) größer gleich 10 mm bis kleiner gleich 20 mm, insbesondere größer gleich 14 mm bis kleiner gleich 18 mm, beträgt,
wobei vorzugsweise der Durchmesser d der zentralen Welle (20) größer gleich 1 mm bis kleiner gleich 10 mm, insbesondere größer gleich 4 mm bis kleiner gleich 8 mm beträgt.

5. Rotorwelle (1) nach einem der Ansprüche 1 bis 4, **dadurch gekennzeichnet, dass**
a) die Flügelbreite G der Mischflügel (210, 211) des ersten Mischabschnitts (21) größer gleich 1 mm bis kleiner gleich 10 mm, insbesondere größer gleich 2 mm bis kleiner gleich 4 mm, beträgt, und/oder
b) die Stegbreite E des Schneckengewindes (220) des zweiten Mischabschnitts (22) größer gleich 0,1 mm bis kleiner gleich 5 mm, insbesondere größer gleich 0,5 mm bis kleiner gleich 2 mm, beträgt.

6. Rotorwelle (1) nach einem der Ansprüche 1 bis 5, **dadurch gekennzeichnet, dass** die Gewindeflanken die Oberfläche der zentralen Welle (20) helixförmig mit einem einheitlichen Gangwinkel α umwinden.

7. Rotorwelle (1) nach Anspruch 6, **dadurch gekennzeichnet, dass**
(i) die Gangbreite B in Bezug auf den Schneckendurchmesser D größer gleich 0,1D bis kleiner gleich 4D, insbesondere größer gleich 0,3D bis kleiner gleich 1,1D, beträgt, und/oder
(ii) die Ganghöhe T in Bezug auf den Schneckendurchmesser D größer gleich 0,25D bis kleiner gleich 4,5D, insbesondere größer gleich 0,5D bis kleiner gleich 1,5D, beträgt.

8. Rotorwelle (1) nach Anspruch 6 oder 7, **dadurch gekennzeichnet, dass** die Gangtiefe H größer gleich 1 mm bis keiner gleich 10 mm, insbesondere größer gleich 4,5 mm bis kleiner gleich 7,5 mm, beträgt.

9. Rotorwelle (1) nach einem der Ansprüche 1 bis 8, **dadurch gekennzeichnet, dass** die Oberfläche der Gewindeflanken des Schneckengewindes (220) eine Rauheit Rₐ von kleiner gleich 2,5 µm, insbesondere eine Rauheit Rₐ von kleiner gleich 1,6 µm aufweist.

10. Rotorwelle (1) nach einem der Ansprüche 1 bis 9, **dadurch gekennzeichnet, dass** die mindestens zwei, im ersten Mischabschnitt (21) auf der Oberfläche der zentralen Welle (20) radial ausgerichteten Mischflügel (210, 211) jeweils aus mindestens drei Mischflügelsegmenten zusammengesetzt sind, wobei die mindestens drei Mischflügelsegmente auf der Oberfläche der zentralen Welle (20) um jeweils 60° bis 120°, insbesondere um ca. 90°, zueinander gedreht angeordnet sind.

11. Rotorwelle (1) nach einem der Ansprüche 1 bis 10, **dadurch gekennzeichnet, dass** zwischen dem Mischbereich (2), insbesondere dem zweiten Mischabschnitt (22), und der Anschlussgeometrie (3) eine ebene kreisringförmige Platte (23) ausgebildet ist, welche das proximale Ende (20.2) der zentralen Welle (20) und die sich daran anschließende Anschlussgeometrie (3) kreisförmig umschließt.

12. Rotorwelle (1) nach Anspruch 11, **dadurch gekennzeichnet, dass** die ebene kreisringförmige Platte (23) zu den schraubenförmig verlaufenden Gewindeflanken des Schneckengewindes (220) im zweiten Mischabschnitt (22) beabstandet angeordnet ist.

13. Rotorwelle (1) nach einem der Ansprüche 1 bis 12, **dadurch gekennzeichnet, dass** die Rotorwelle (1), insbesondere der Mischbereich (2) und/oder die Anschlussgeometrie (3), ein Spritzgussteil ist oder in einem generativen, Materialaufbauendem Verfahren hergestellt wurde.

14. Dynamischer Mischer (0), insbesondere dentaler dynamischer Mischer, zum Mischen niedrig- bis hochviskoser Komponenten umfassend eine Rotorwelle (1) nach einem der Ansprüche 1 bis 13, wobei der dynamische Mischer (0) ein Gehäuse (10) umfassend einen Gehäusekörper (11) mit mindestens einer Auslassöffnung (11A) und einen den Gehäusekörper (11) verschließenden Deckel (12) mit mindestens zwei Einlassöffnungen (12A, 12B) zur Einbringung der zu mischenden Komponenten sowie einer Rotoröffnung (12.1) umfasst, wobei die Rotorwelle (1) mit ihrem Mischbereich (2) rotierbar innerhalb des Gehäuses (10) angeordnet ist und die Rotoröffnung (12.1) zur Aufnahme der Anschlussgeometrie (3) der Rotorwelle (1) vorgesehen ist.

15. Dynamischer Mischer (0) nach Anspruch 14, **dadurch gekennzeichnet, dass** das Gehäuse (10) mindestens eine im Gehäusekörper (11) angeordnete Hauptmischkammer (110) sowie mindestens eine im Gehäusekörper und/oder im Deckel (12) angeordnete Vormischkammer (111) umfasst, wobei der erste Mischabschnitt (21) der Rotorwelle (1) innerhalb der Hauptmischkammer (110) und der zweite Mischabschnitt (22) der Rotorwelle (1) innerhalb der Vormischkammer (111) angeordnet ist.

16. Dynamischer Mischer (0) nach Anspruch 15, **dadurch gekennzeichnet, dass** das Verhältnis des Volumens der Vormischkammer zum Volumen der Hauptmischkammer im Bereich von 1 : 2 bis 2 : 1, bevorzugt im Bereich von 2 : 3 bis 3 : 2, besonders bevorzugt bei etwa 1 : 1.

17. Dynamischer Mischer (0) nach einem der Ansprüche 14 bis 16, **dadurch gekennzeichnet, dass** das Gehäuse (10) mindestens eine im Gehäusekörper (11) und/oder im Deckel (12) angeordnete Vorkammer (112) umfasst, innerhalb welcher das proximale Ende (20.2) der zentralen Welle (20) angeordnet ist.

18. Dynamischer Mischer (0) nach Anspruch 17, **dadurch gekennzeichnet, dass** die Vorkammer (112) zwischen den mindestens zwei Einlassöffnungen (12A, 12B) und der mindestens einen Vormischkammer (111) angeordnet ist.

19. Dynamischer Mischer (0) nach einem der Ansprüche 15 bis 18, **dadurch gekennzeichnet, dass** das Schneckenspiel zwischen dem Schneckengewinde (220) des zweiten Mischabschnitts (22) und den inneren Wandungen der Vormischkammer (111) größer gleich 0,01 mm bis kleiner gleich 1 mm beträgt.

20. Verwendung eines dynamischen Mischers (0) nach einem der Ansprüche 15 bis 19 zum Mischen von mindestens zwei niedrig- bis hochviskosen Komponenten, insbesondere von mindestens zwei niedrig- bis hochviskosen Dentalmaterialien.

## Claims

1. Rotor shaft (1) for a dynamic mixer (0) for mixing low to high viscous components, comprising a mixing area (2) and a connection geometry (3) adjoining the mixing area (2), the mixing area (2) comprising a central shaft (20) having a distal end (20.1) and a proximal end (20.2) abutting the connection geometry (3),
the mixing area (2) has at least two mixing sections (21, 22) along the central shaft (20), wherein a first mixing section (21) at the distal end (20.1) of the central shaft (20) comprising at least two mixing blades (210, 211) radially oriented on the surface of the central shaft (20) and a second mixing section (22) at the proximal end (20.2) of the central shaft (20) comprising at least one worm thread (220) having at least two spirally running thread flanks, wherein the spirally running thread flanks peripherally entwining the surface of the central shaft (20),
**characterised in that**,
the distal end of the central shaft (20) is conically tapered.

2. Rotor shaft (1) according to claim 1, wherein in that
the spirally running thread flanks of the worm thread (220) in the second mixing section (22) are spaced from the at least two mixing blades (210, 211) in the first mixing section (21).

3. Rotor shaft (1) according to claim 1 or 2, wherein in that
the ratio of the length of the second mixing section (22) to the length of the first mixing section (21) is in the range interval of 1 : 4 to 10 : 1, preferably in the range interval of 1 : 3 to 5 : 1, particularly preferably of 1 : 2.5 to 2.5 : 1.

4. Rotor shaft (1) according to any one of claims 1 to 3, wherein in that
a) the blade diameter F of the mixing blades (210, 211) of the first mixing section (21) amounts to greater than or equal to 10 mm to less than or equal to 20 mm, in particular greater than or equal to 11 mm to less than or equal to 15 mm, and/or
b) the worm diameter D of the worm thread (220) of the second mixing section (22) amounts to greater than or equal to 10 mm to less than or equal to 20 mm, in particular greater than or equal to 14 mm to less than or equal to 18 mm, wherein
preferably the diameter d of the central shaft (20) amounting to greater than or equal to 1 mm to less than or equal to 10 mm, in particular greater than or equal to 4 mm to less than or equal to 8 mm.

5. Rotor shaft (1) according to any one of claims 1 to 4, wherein in that
a) the blade width G of the mixing blades (210, 211) of the first mixing section (21) amounts to greater than or equal to 1 mm to less than or equal to 10 mm, in particular greater than or equal to 2 mm to less than or equal to 4 mm, and/or
b) the web width E of the worm thread (220) of the second mixing section (22) amounts to greater than or equal to 0.1 mm to less than or equal to 5 mm, in particular greater than or equal to 0.5 mm to less than or equal to 2 mm.

6. Rotor shaft (1) according to any one of claims 1 to 5, wherein in that
the thread flanks entwine the surface of the central shaft (20) helically having a uniform thread angle α.

7. Rotor shaft (1) according to claim 6, wherein in that
(i) the thread width B as related to the worm diameter D amounts to greater than or equal to 0.1D to less than or equal to 4D, in particular greater than or equal to 0.3D to less than or equal to 1.1D, and/or
(ii) the thread height T as related to the worm diameter D amounts to greater than or equal to 0.25D to less than or equal to 4.5D, in particular greater than or equal to 0.5D to less than or equal to 1.5D.

8. Rotor shaft (1) according to claim 6 or 7, wherein in that
the thread depth H amounts to greater than or equal to 1 mm to less than or equal to 10 mm, in particular greater than or equal to 4.5 mm to less than or equal to 7.5 mm.

9. Rotor shaft (1) according to any one of claims 1 to 8, wherein in that
the surface of the thread flanks of the worm thread (220) has a roughness Rₐ of less than or equal to 2.5 µm, in particular a roughness Rₐ of less than or equal to 1.6 µm.

10. Rotor shaft (1) according to any one of claims 1 to 9, wherein in that
the at least two mixing blades 210, 211) radially oriented in the first mixing section (21) on the surface of the central shaft (20) are composed each of at least three mixing blade segments, the at least three mixing blade segments being turned relative to each other on the surface of the central shaft (20) by respectively 60° to 120°, in particular by approx. 90°.

11. Rotor shaft (1) according to any one of claims 1 to 10, wherein in that
a plane circular plate (23) is formed between the mixing area (2), in particular the second mixing section (22), and the connection geometry (3), which circularly encloses the proximal end (20.2) of the central shaft (20) and the connection geometry (3) adjoining thereto.

12. Rotor shaft (1) according to claim 11, wherein in that
the plane circular plate (23) is spaced from the spirally running thread flanks of the worm thread (220) in the second mixing section (22).

13. Rotor shaft (1) according to any one of claims 1 to 12, wherein in that
the rotor shaft (1), in particular the mixing area (2) and/or the connection geometry (3), is an injection-molded part or has been produced in a generative material-adding process.

14. Dynamic mixer (0), in particular dental dynamic mixer, for mixing low to high viscous components comprising a rotor shaft (1) according to any of claims 1 to 13, wherein the dynamic mixer (0) comprising a housing (10) comprising a housing body (11) having at least one outlet opening (11A) and a cover (12) closing the housing body (11) having at least two inlet openings (12A, 12B) for insertion of the components to be mixed, as well as a rotor opening (12.1), the rotor shaft (1) with its mixing area (2) being rotatably arranged within the housing (10) and the rotor opening (12.1) being provided to receive the connection geometry (3) of the rotor shaft (1).

15. Dynamic mixer (0) according to claim 14, wherein in that
the housing (10) comprises at least one main mixing chamber (110) arranged in the housing body (11) as well as at least one pre-mixing chamber (111) arranged in the housing body and/or in the cover (12), wherein the first mixing section (21) of the rotor shaft (1) being arranged within the main mixing chamber (110) and the second mixing section (22) of the rotor shaft (1) being arranged within the pre-mixing chamber (111).

16. Dynamic mixer (0) according to claim 15, wherein in that the ratio of the volume of the pre-mixing chamber to the volume of the main mixing chamber is in the range of 1 : 2 to 2 : 1, preferably in the range of 2 : 3 to 3 : 2, particularly preferably at about 1 : 1.

17. Dynamic mixer (0) according to any of claims 14 to 16, wherein in that the housing (10) comprises at least one pre-chamber (112) arranged in the housing body (11) and/or in the cover (12) the proximal end (20.2) of the central shaft (20) being arranged within which.

18. Dynamic mixer (0) according to claim 17, wherein in that
the pre-chamber (112) is arranged between the at least two inlet openings (12A, 12B) and the at least one pre-mixing chamber (111).

19. Dynamic mixer (0) according to any of claims 15 to 18, wherein in that the worm clearance between the worm thread (220) of the second mixing section (22) and the inner walling of the pre-mixing chamber (111) amounts to greater than or equal to 0.01 mm to less than or equal to 1 mm.

20. Use of a dynamic mixer (0) according to any one of claims 15 to 19 for mixing at least two low to high viscous components, in particular at least two low to high viscous dental materials.

## Revendications

1. Arbre de rotor (1) pour un mélangeur dynamique (0) destiné à mélanger des composants de faible à forte viscosité, comprenant une zone de mélange (2) et une géométrie de raccordement (3) se raccordant à la zone de mélange (2), la zone de mélange (2) comprenant un arbre central (20) avec une extrémité distale (20.1) et une extrémité proximale (20.2) adjacente à la géométrie de raccordement (3),
la zone de mélange (2) comprenant au moins deux sections de mélange (21, 22) le long de l'arbre central (20), une première section de mélange (21) à l'extrémité distale (20.1) de l'arbre central (20) comprenant au moins deux pales de mélange (210, 211), orientées radialement sur la surface de l'arbre central (20), et une deuxième section de mélange (22) à l'extrémité proximale (20.2) de l'arbre central (20) comprenant au moins un filet de vis sans fin (220) avec au moins deux flancs de filet hélicoïdaux, les flancs de filet hélicoïdaux entourant de manière périphérique la surface de l'arbre central (20), **caractérisé en ce que** l'extrémité distale de l'arbre central (20) est conçue de manière conique.

2. Arbre de rotor (1) selon la revendication 1, **caractérisé en ce que**
les flancs de filet hélicoïdaux du filet de vis sans fin (220) dans la deuxième section de mélange (22) sont disposés à distance des au moins deux pales de mélange (210, 211) dans la première section de mélange (21).

3. Arbre de rotor (1) selon la revendication 1 ou 2, **caractérisé en ce que**
le rapport entre la longueur de la deuxième section de mélange (22) et la longueur de la première section de mélange (21) se situe dans l'intervalle de gamme de 1 : 4 à 10 : 1, préférablement dans l'intervalle de gamme de 1 : 3 à 5 : 1, plus préférablement de 1 : 2,5 à 2,5 : 1.

4. Arbre de rotor (1) selon l'une des revendications 1 à 3, **caractérisé en ce que**
a) le diamètre de pale F des pales de mélange (210, 211) de la première section de mélange (21) est supérieur ou égal à 10 mm et inférieur ou égal à 20 mm, en particulier supérieur ou égal à 11 mm et inférieur ou égal à 15 mm, et/ou
b) le diamètre de vis sans fin D du filet de vis sans fin (220) de la deuxième section de mélange (22) est supérieur ou égal à 10 mm et inférieur ou égal à 20 mm, en particulier supérieur ou égal à 14 mm et inférieur ou égal à 18 mm,
le diamètre d de l'arbre central (20) étant de préférence supérieur ou égal à 1 mm et inférieur ou égal à 10 mm, en particulier supérieur ou égal à 4 mm et inférieur ou égal à 8 mm.

5. Arbre de rotor (1) selon l'une des revendications 1 à 4, **caractérisé en ce que** a) la largeur de pale G des pales de mélange (210, 211) de la première section de mélange (21) est supérieure ou égale à 1 mm et inférieure ou égale à 10 mm, en particulier supérieure ou égale à 2 mm et inférieure ou égale à 4 mm, et/ou b) la largeur d'entretoise E du filet de vis sans fin (220) de la deuxième section de mélange (22) est supérieure ou égale à 0,1 mm et inférieure ou égale à 5 mm, en particulier supérieure ou égale à 0,5 mm et inférieure ou égale à 2 mm.

6. Arbre de rotor (1) selon l'une des revendications 1 à 5, **caractérisé en ce que** les flancs du filet entourent la surface de l'arbre central (20) en forme d'hélice avec un angle de pas α uniforme.

7. Arbre de rotor (1) selon la revendication 6, **caractérisé en ce que**
(i) la largeur de pas B par rapport au diamètre de vis sans fin D est supérieure ou égale à 0,1D et inférieure ou égale à 4D, en particulier supérieure ou égale à 0,3D et inférieure ou égale à 1,1D, et/ou
(ii) la hauteur de pas T par rapport au diamètre de vis sans fin D est supérieure ou égale à 0,25D et inférieure ou égale à 4,5D, en particulier supérieure ou égale à 0,5D et inférieure ou égale à 1,5D.

8. Arbre de rotor (1) selon la revendication 6 ou 7, **caractérisé en ce que**
la profondeur de pas H est supérieure ou égale à 1 mm et inférieure ou égale à 10 mm, en particulier supérieure ou égale à 4,5 mm et inférieure ou égale à 7,5 mm.

9. Arbre de rotor (1) selon l'une des revendications 1 à 8, **caractérisé en ce que**
la surface des flancs de filet du filet de vis sans fin (220) présente une rugosité Rₐ inférieure ou égale à 2,5 µm, en particulier une rugosité Rₐ inférieure ou égale à 1,6 µm.

10. Arbre de rotor (1) selon l'une des revendications 1 à 9, **caractérisé en ce que**
les au moins deux pales de mélange (210, 211), orientées radialement dans la première section de mélange (21) sur la surface de l'arbre central (20), sont composées chacune d'au moins trois segments de pales de mélange, les au moins trois segments de pales de mélange étant disposés sur la surface de l'arbre central (20) en étant tournés respectivement de 60° à 120°, en particulier d'environ 90°, les uns par rapport aux autres.

11. Arbre de rotor (1) selon l'une des revendications 1 à 10, **caractérisé en ce que** entre la zone de mélange (2), en particulier la deuxième section de mélange (22), et la géométrie de raccordement (3) est formée une plaque (23) plane en forme de cercle qui entoure de manière circulaire l'extrémité proximale (20.2) de l'arbre central (20) et la géométrie de raccordement (3) qui s'y raccorde.

12. Arbre de rotor (1) selon la revendication 11, **caractérisé en ce que**
la plaque (23) plane en forme de cercle est disposée à distance des flancs de filet hélicoïdaux du filet de vis sans fin (220) dans la deuxième section de mélange (22).

13. Arbre de rotor (1) selon l'une des revendications 1 à 12, **caractérisé en ce que** l'arbre de rotor (1), en particulier la zone de mélange (2) et/ou la géométrie de raccordement (3), est une pièce moulée par injection ou a été fabriqué par un procédé de génération par accumulation de matériau.

14. Mélangeur dynamique (0), en particulier mélangeur dynamique dentaire, destiné à mélanger des composants de faible à forte viscosité, comprenant un arbre de rotor (1) selon l'une des revendications 1 à 13, le mélangeur dynamique (0) comprenant un boîtier (10) comportant un corps de boîtier (11) avec au moins une ouverture de sortie (11A) et un couvercle (12) fermant le corps de boîtier (11) avec au moins deux ouvertures d'entrée (12A, 12B) pour l'introduction des composants à mélanger ainsi qu'une ouverture de rotor (12.1), l'arbre de rotor (1) étant disposé avec sa zone de mélange (2) de manière à pouvoir tourner à l'intérieur du boîtier (10) et l'ouverture de rotor (12.1) étant prévue pour recevoir la géométrie de raccordement (3) de l'arbre de rotor (1).

15. Mélangeur dynamique (0) selon la revendication 14, **caractérisé en ce que** le boîtier (10) comprend au moins une chambre de mélange principale (110) disposée dans le corps de boîtier (11) ainsi qu'au moins une chambre de prémélange (111) disposée dans le corps de boîtier et/ou dans le couvercle (12), la première section de mélange (21) de l'arbre de rotor (1) étant disposée à l'intérieur de la chambre de mélange principale (110) et la deuxième section de mélange (22) de l'arbre de rotor (1) à l'intérieur de la chambre de prémélange (111).

16. Mélangeur dynamique (0) selon la revendication 15, **caractérisé en ce que** le rapport entre le volume de la chambre de prémélange et le volume de la chambre de mélange principale est compris dans la plage de 1 : 2 à 2 : 1, préférablement dans la plage de 2 : 3 à 3 : 2, plus préférablement se situe à environ 1 : 1.

17. Mélangeur dynamique (0) selon l'une des revendications 14 à 16, **caractérisé en ce que** le boîtier (10) comprend au moins une préchambre (112) disposée dans le corps de boîtier (11) et/ou dans le couvercle (12), à l'intérieur de laquelle est disposée l'extrémité proximale (20.2) de l'arbre central (20).

18. Mélangeur dynamique (0) selon la revendication 17, **caractérisé en ce que**
la préchambre (112) est disposée entre les au moins deux ouvertures d'entrée (12A, 12B) et l'au moins une chambre de prémélange (111).

19. Mélangeur dynamique (0) selon l'une des revendications 15 à 18, **caractérisé en ce que** le jeu de vis sans fin entre le filet de vis sans fin (220) de la deuxième section de mélange (22) et les parois internes de la chambre de prémélange (111) est supérieur ou égal à 0,01 mm et inférieur ou égal à 1 mm.

20. Utilisation d'un mélangeur dynamique (0) selon l'une des revendications 15 à 19 pour le mélange d'au moins deux composants de faible à forte viscosité, en particulier d'au moins deux matériaux dentaires de faible à forte viscosité.
